# EUROPEAN PATENT SPECIFICATION

(11) **EP 4 420 467 B1**
(45) Date of publication and mention of the grant of the patent: **05.03.2025**
(21) Application number: 22800855.3
(22) Date of filing: 19.10.2022
(51) Int. Cl.: H04W 74/0833

(54) **RADIO NETWORK NODE, USER EQUIPMENT AND METHODS PERFORMED THEREIN**
FUNKNETZWERKKNOTEN, BENUTZERGERÄT UND DARIN DURCHGEFÜHRTE VERFAHREN
NOEUD DE RÉSEAU RADIOÉLECTRIQUE, ÉQUIPEMENT D'UTILISATEUR ET PROCÉDÉS RÉALISÉS PAR CEUX-CI

(30) Priority: 21.10.2021 WO PCT/CN2021/125334
(43) Date of publication of application: 28.08.2024
(73) Proprietor: Telefonaktiebolaget LM Ericsson (publ), 164 83 Stockholm (SE)
(72) Inventor: SEDIN, Jonas, Brentford, Greater London TW8 0SU (GB); LIN, Zhipeng, NANJING, Jiangsu 211100 (CN); FELTRIN, Luca, 171 47 SOLNA (SE); BERGSTRÖM, Mattias, 19270 SOLLENTUNA (SE); TORABIAN ESFAHANI, Tahmineh, 192 51 SOLLENTUNA (SE)
(74) Representative: Ericsson
(86) International application number: PCT/SE2022/050949
(87) International publication number: WO 2023/068994

(56) References cited:
- US-A1- 2020 022 187
- ZTE CORPORATION ET AL: "Consideration on the slice specific RACH configuration", vol. RAN WG2, no. Electronic; 20201102 - 20201113, 22 October 2020 (2020-10-22), XP051941434, Retrieved from the Internet <URL:https://ftp.3gpp.org/tsg_ran/WG2_RL2/TSGR2_112-e/Docs/R2-2009806.zip R2-2009806_Consideration on the slice specific RACH configuration.docx> [retrieved on 20201022]
- CATT: "Discussion on Type A PUSCH repetitions for Msg3", vol. RAN WG1, no. e-Meeting; 20210412 - 20210420, 7 April 2021 (2021-04-07), XP052177664, Retrieved from the Internet <URL:https://ftp.3gpp.org/tsg_ran/WG1_RL1/TSGR1_104b-e/Docs/R1-2102646.zip R1-2102646 Discussion on Type A PUSCH repetitions for Msg3-final.docx> [retrieved on 20210407]
- HUAWEI ET AL: "RAN1 aspects of RedCap UE type and identification", vol. RAN WG1, no. E-meeting; 20210816 - 20210827, 7 August 2021 (2021-08-07), XP052037790, Retrieved from the Internet <URL:https://ftp.3gpp.org/tsg_ran/WG1_RL1/TSGR1_106-e/Docs/R1-2106462.zip R1-2106462.docx> [retrieved on 20210807]

## Description

### TECHNICAL FIELD

Embodiments herein relate to a radio network node, a user equipment (UE) and methods performed therein regarding wireless communication. Furthermore, a computer program product and a computer-readable storage medium are also provided herein. In particular, embodiments herein relate to handling communication, such as handling or controlling access to the radio network node, in a wireless communications network.

### BACKGROUND

In a typical wireless communications network, UEs, also known as wireless communication devices, mobile stations, stations (STA) and/or wireless devices, communicate via a Radio Access Network (RAN) with one or more core networks (CN). The RAN covers a geographical area which is divided into service areas or cells, with each service area or cell being served by a radio network node such as an access node e.g. a Wi-Fi access point or a radio base station (RBS), which in some networks may also be called, for example, a NodeB, a gNodeB, or an eNodeB. The service area or cell is a geographical area where radio coverage is provided by the radio network node. The radio network node operates on radio frequencies to communicate over an air interface with the UEs within range of the radio network node. The radio network node communicates over a downlink (DL) to the UE and the UE communicates over an uplink (UL) to the radio network node.

A Universal Mobile Telecommunications System (UMTS) is a third generation (3G) telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipment. In a forum known as the Third Generation Partnership Project (3GPP), telecommunications suppliers propose and agree upon standards for present and future generation networks and investigate e.g. enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3GPP and coming 3GPP releases, such as New Radio (NR), are worked on. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies such as new radio (NR), the use of very many transmit- and receive-antenna elements may be of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

In order to be able to carry the data across the 5G NR RAN, data and information is organized into a number of data channels. By organizing the data into various channels, a 5G communications system is able to manage the data transfers in an orderly fashion and the system is able to understand what data is arriving and hence it is able to process the data in the required fashion. As there are many different types of data that need to be transferred - user data obviously needs to be transferred, but so does control information to manage the radio communications link, as well as data to provide synchronization, access, and the like. All of these functions are essential and require the transfer of data over the RAN.

In order to group the data to be sent over the 5G NR RAN, the data is organized in a very logical way. As there are many different functions for the data being sent over the radio communications link, they need to be clearly marked and have defined positions and formats. To ensure this happens, there are several different forms of data "channel" that are used. The higher level ones are "mapped" or contained within others until finally at the physical level, the channel contains data from higher level channels.

In this way there is a logical and manageable flow of data from the higher levels of the protocol stack down to the physical layer.

There are three main types of data channels that are used for a 5G RAN, and accordingly the hierarchy is given below.
- Logical channel: Logical channels can be one of two groups: control channels and traffic channels:
   □ Control channels: The control channels are used for the transfer of data from the control plane; and
   □ Traffic channels: The traffic logical channels are used for the transfer of user plane data.
- Transport channel: handles multiplexing of the logical data to be transported by the physical layer and its channels over the radio interface.
- Physical channel: The physical channels are those which are closest to the actual transmission of the data over the radio access network / 5G radio frequency (RF) signal. They are used to carry the data over the radio interface.

The physical channels often have higher level channels mapped onto them for providing a specific service. Additionally, the physical channels carry payload data or details of specific data transmission characteristics like modulation, reference signal multiplexing, transmit power, RF resources, etc.

The 5G physical channels are used to transport information over the actual radio interface. They have the transport channels mapped into them, but they also include various physical layer data required for the maintenance and optimization of the radio communications link between a UE and a base station (BS).

There are three physical channels for each of the uplink and downlink: Physical Downlink Shared Channel (PDSCH), Physical Downlink Control Channel (PDCCH), and Physical Broadcast Channel (PBCH) for downlink, and Physical Random Access Channel (PRACH), Physical Uplink Shared Channel (PUSCH), and Physical Uplink Control Channel (PUCCH) for uplink.

Two types of random access (RA) procedures are supported in NR release (Rel) - 16, where a MsgA PUSCH or a Msg3 PUSCH transmissions are used for transmission of radio resource control (RRC) setup request message in 2-step RACH RA type and 4-step RA type respectively. Neither Msg3 PUSCH nor MsgA PUSCH can be repeated in NR up to Rel-16.

The 2 types of RA procedures are described in the following sub-clauses.

4-step random access procedure in NR.

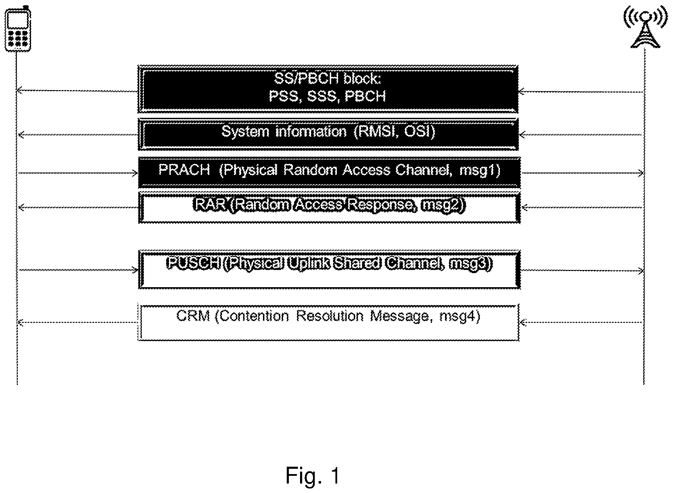

A 4-step approach is used for the random access procedure, see Fig. 1. In this approach, the UE detects a synchronization signal (SS) and decodes the broadcasted system information, which may be distributed over multiple physical channels, such as PBCH and PDSCH, to acquire random access transmission parameters, followed by transmitting a PRACH preamble (message 1) in the uplink.

The gNB detects message 1 and replies with a Random Access Response (RAR) message (message 2). The UE then transmits a UE identification (message 3) on PUSCH. The UE transmits PUSCH (message 3) after receiving a timing advance command in the RAR and after adjusting the timing of the PUSCH transmission, allowing PUSCH to be received at gNB with a timing accuracy within the cyclic prefix (CP). Without this timing advance functionality, a very large CP would be needed in order to be able to demodulate and detect PUSCH, unless the system is applied in a cell with very small distance between UE and gNB. Since NR will also support larger cells, there is a need for providing a timing advance to the UE and thus the 4-step approach is needed for random access procedure.

2-step RACH work item for Release 16 in 3GPP.

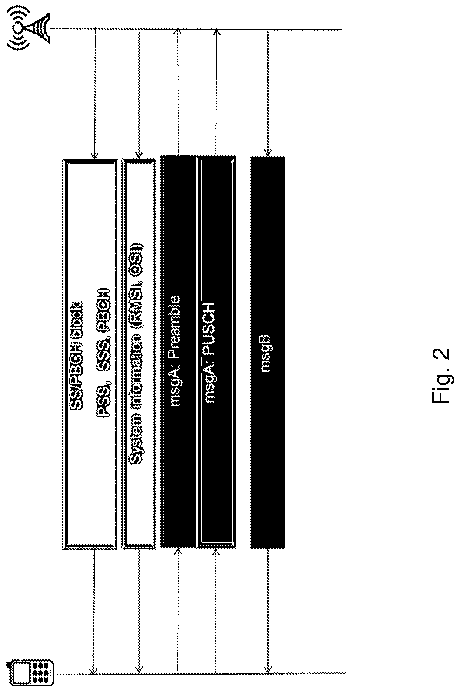

A 2-step RACH work item has been approved in RAN1 #82 plenary meeting where completing the initial access in only two steps, comprising messages A and B, as illustrated in Fig. 2 is in the scope. Here, the first steps of detecting synchronization signal block (SSB) and system information are same as in the 4-step approach but then follows only two steps in order to minimize the number of channel accesses, which is important for, e.g., operation in unlicensed frequency bands where listen before talk must be performed before transmission.
- **Step 1:** UE sends a message A including random access preamble together with higher layer data such as RRC connection request possibly with some small additional payload on PUSCH;
- **Step 2:** The gNB sends RAR (denoted message B) including UE identifier assignment, timing advance information, and contention resolution message etc.

PRACH resource selection and SSB to RACH Occasion (RO) mapping.

In both 4-step RACH and 2-step RACH, PRACH resources are selected based on the SSB selection and a SSB to RO/preamble mapping. Detailed procedures of PRACH resource selection can be found in section 5.1.2 and 5.1.2a of 38.321 v.16.0.0 for 2-step RACH and 4-step RACH respectively.

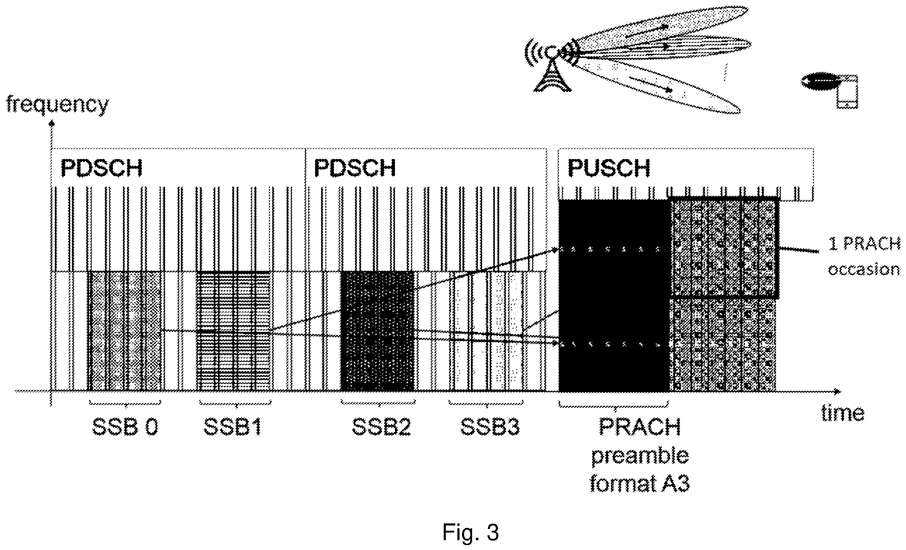

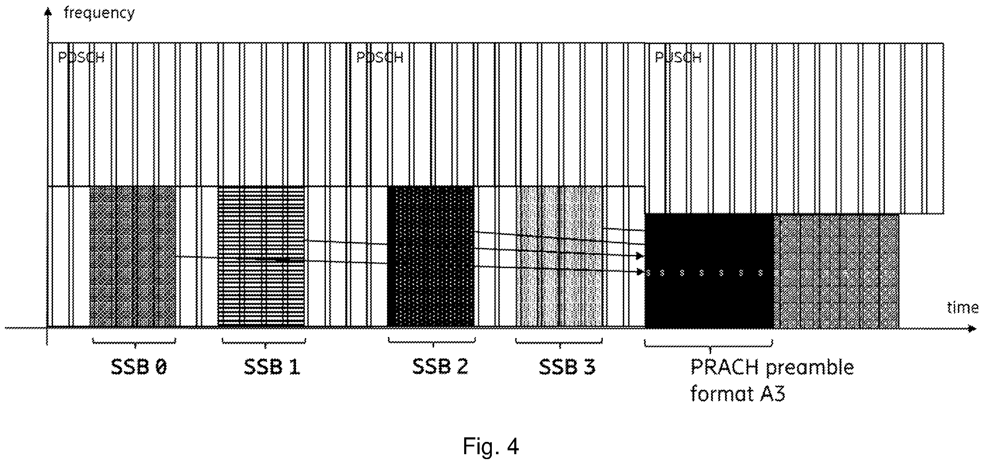

The mapping between SSB and PRACH can be one-to-one, one-to-many, and many-to-one in a predetermined order specified in standard, as illustrated in **Fig. 3** and **Fig. 4****.**

When UE determines one good enough SSB beam with SS-reference signal received power (RSRP) above a RSRP threshold, for example, rsrp-ThresholdSSB, a preamble in the set of one or more preambles in a physical random access channel (PRACH) occasion mapped to this SSB will be selected for the random access, then when the gNB detects the preamble, the determined SSB beam for this UE is known indirectly so that determined beam can be used for transmitting signals to or receiving signals from this UE.

Random access prioritization.

Prioritized random access is used to allow UEs to have parameters that enables the random access to have an increased likeliness of success compared to other UEs. In release 15 it was possible to configure random access prioritization for the Beam Failure Recovery (BFR) and contention free random access (CFRA) procedure and in release 16 random access for specific UEs through a so-called access identity was introduced and the prioritized random access was made allowed for 2-step random access.

Prioritized random access currently allows for a scaling factor of the backoff indicator which allows for faster random access re-attempts after having received a backoff indicator as a Msg2 and a higher power ramping step when performing re-attempts.

The random access per access identity can be seen in the following from 38.321 v16.0.0:
2> else if *ra-PrioritizationForAccessldentityTwoStep* is configured for the selected carrier; and
2> if the MAC entity is provided by upper layers with Access Identity 1 or 2; and
2> if for at least one of these Access Identities the corresponding bit in the *ra-PrioritizationForAl* is set to *one:*
   3> if *powerRampingStepHighPriority* is configured in the *ra-PrioritizationForAccessldentityTwoStep:*
      4> set *PREAMBLE_POWER_RAMPING_STEP* to the *powerRampingStepHighPriority.*
   3> if *scalingFactorBI* is configured in the *ra-PrioritizationForAccessIdentityTwoStep:*
      4> set *SCALING_FACTOR_BI* to the *scalingFactorBI.*

Random access prioritization is configured through the following parameters:
- RA-Prioritization

The IE *RA-Prioritization* is used to configure prioritized random access.

### RA-Prioritization information element

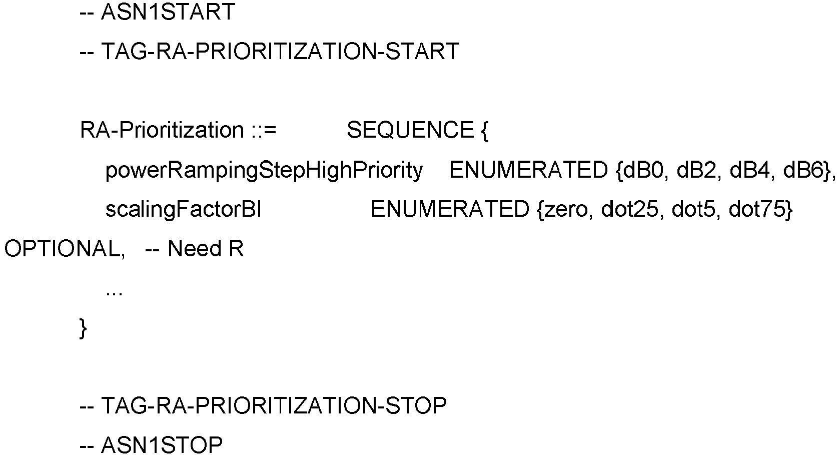

| |
|---|
| ***RA-Prioritization* field descriptions** |
| ***powerRampingStepHighPrioritiy*** |
| Power ramping step applied for prioritized random access procedure. |
| ***scalingFactorBI*** |
| Scaling factor for the backoff indicator (BI) for the prioritized random access procedure. (see TS 38.321 v.16.0.0, clause 5.1.4). Value *zero* corresponds to 0, value *dot25* corresponds to 0.25 and so on. |

Random access for msg3 repetitions.

During the discussions in the meetings from RAN1 #104-e, the first meeting of the NR coverage enhancement work item in Rel-17, to RAN1 #105-e, following agreements have been made regarding the Msg3 repetition criteria, where we can see
• UE determines a separate PRACH resource, separate preamble or separate PRACH occasions, based at least on RSRP of the downlink pathloss reference and the RSRP threshold
• Based on the PRACH resource on which a PRACH is detected, gNB is aware of whether a Msg3 repetition can be enabled for the UE sending this PRACH.

| | | | | |
|---|---|---|---|---|
| Agreement: For Msg3 PUSCH repetition, support the following modified Option 2-1. | | | | |
| ➢ Option 2-1: For UE requested triggered Msg3 PUSCH repetition with gNB indicating the number of repetitions, | | | | |
| | | ▪ A UE can request trigger RACH procedure with Msg3 PUSCH repetition via separate PRACH resources (For further study (FFS) details, e.g., separate PRACH occasion or separate PRACH preamble in case of shared PRACH occasions after SSB association, etc.). | | |
| | | ◆ Whether a UE would request trigger is based on some conditions, e.g., measured SS-RSRP threshold, which may or may not have spec impact. | | |
| | | ▪ If Msg3 PUSCH repetition is requested triggered by UE, gNB decides whether to schedule Msg3 PUSCH repetition or not. If scheduled, gNB decides the number of repetitions for Msg3 PUSCH 3 (re)-transmission. | | |
| | | ▪ FFS the UE capability of supporting Msg3 PUSCH repetition can be reported after initial access procedure as usual | | |
| | | ▪ FFS details if any. | | |
| Agreement: A UE requests Msg3 PUSCH repetition at least when the RSRP of the downlink pathloss reference is lower than an RSRP threshold. | | | | |
| | • FFS the determination of the RSRP threshold. Agreement: | | | |
| | • For requesting Msg3 PUSCH repetition, support the following: | | | |
| | | | ∘ Use separate preamble with shared RO configured by the same PRACH configuration index with legacy UEs. | |
| | | | | ▪ FFS whether to introduce a PRACH mask to indicate a sub-set of ROs associated with a same SSB index within an SSB-RO mapping cycle for requesting Msg3 repetition for a UE. |
| | | | | ▪ FFS definition of shared RO (e.g., whether the shared RO can be an RO with preamble(s) for 4-step RACH only or with preambles for both 4-step RACH and 2-step RACH). |
| | | | ∘ FFS whether or not to additionally support one (& only one) more option: | |
| | | | ▪ E.g., option 2: Use separate RO configured by a separate PRACH configuration index from legacy UEs | |
| | | | ▪ E.g., Option 3: Use separate RO, which include | |
| | | | | • the separate RO configured by a separate RACH configuration index from legacy UE, and |
| | | | | • the remaining RO (if any) configured, by the same PRACH configuration index with legacy UEs, that cannot be used by legacy rules for PRACH transmission. |

### Random access for slicing.

For slicing according to the standardization discussions, there will be multiple slices that a UE could select from based on what slice that the UE has selected. Each slice may potentially have its own random access resources, i.e., preambles and/or PRACH occasions, thus the UE will first select some slice and then select a PRACH resource based on what slicing ID that was selected.

### Random access for small data transmissions (SDT).

For small data transmission in RRC inactive state according to the current standardization discussions, the UE will first determine whether small data transmissions shall be initiated by comparing the RSRP to a threshold, current name is *sdt-RSRP-Threshold,* and also comparing the amount of data in the buffer across the logical channels. Then the UE either selects configured-grant based small data transmissions (CG-SDT) or random access based small data transmission according to another RSRP threshold, also referred to as *cg-SDT-RSRP-ThresholdSSB.*

### Random access for RedCap.

For Redcap, indication of being a Redcap UE, in other words a UE where the maximum bandwidth is 20 MHz or smaller, may be needed for random access so that the network will not schedule any of the following messages with a bandwidth larger than 20 MHz. Thus, a UE will select a set of preambles that indicates that the UE is a Redcap UE.

Examples for selecting preamble groups can be found in documents R2-2009806: Consideration on the slice specific RACH configuration, US2020/0022187, R1-2102646: Discussion on Type A PUSCH repetitions for Msg3 and R1-2106462: RAN1 aspects of RedCap UE type and identification.

### SUMMARY

As part of developing embodiments here one or more problems were first identified. When performing random access and indicating something using the preambles for the features introduced for coverage enhancements, slicing, small data and redcap, conditions for each have been introduced. In RAN2#115-e it was also agreed that it should be possible to indicate combinations of the features above.

The problem with existing solutions relates to the conditions how to select a certain preamble group when a preamble group consists of multiple features. The problem can be illustrated by for instance, the number of RSRP thresholds or threshold offsets that was introduced for 2-step random access:
- RACH-ConfigCommonTwoStepRA

The IE *RACH-ConfigCommonTwoStepRA* is used to specify cell specific 2-step random-access type parameters.

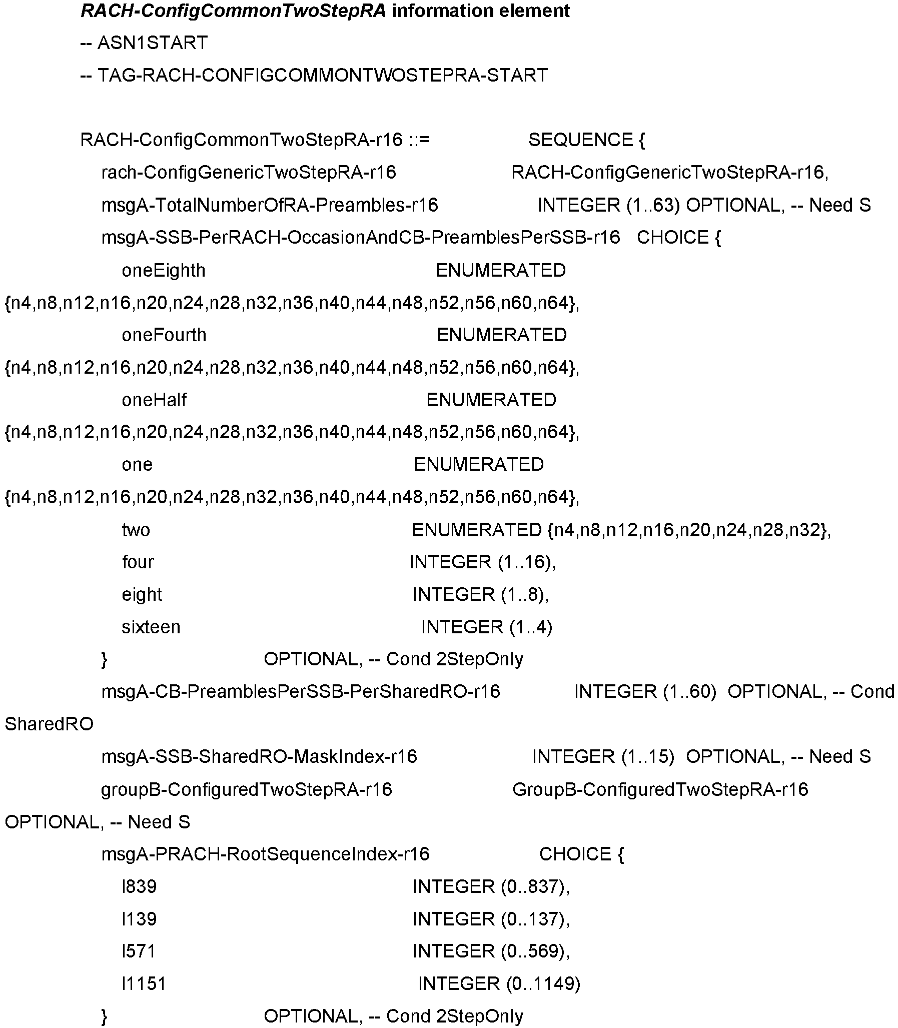

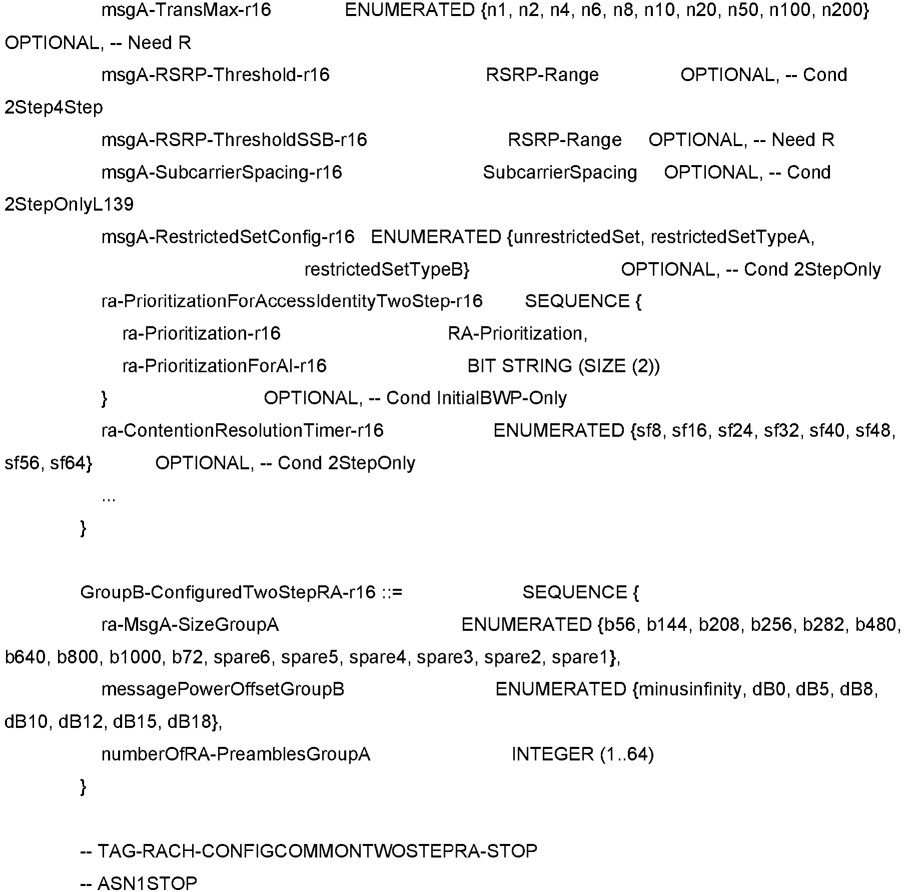

In this case there are three thresholds introduced, where the *msgA-RSRP-threshold* determines whether the UE shall select 2-step or 4-step random access, the *msgA-RSRP-threshold* is a threshold to select a "good" RSRP threshold and *messagePowerOffestGroupB* acts as an offset to either select random access group A or group B. More thresholds require more complicated solutions.

Another problem is when new features are introduced, new thresholds are introduced to determine whether a specific feature shall be used or not. As one example, in Rel-17 the msg3 repetitions are being introduced where a new threshold is being used to determine how to select preambles, furthermore in the future it is likely that repetitions of msg1 will be introduced through another threshold. The issue with this is that it may be challenging to combine the two features if there are two separate thresholds. In the Rel-17 RACH indication and partitioning Work Item it was agreed that multiple features may be combined so that the UE can signal multiple features.

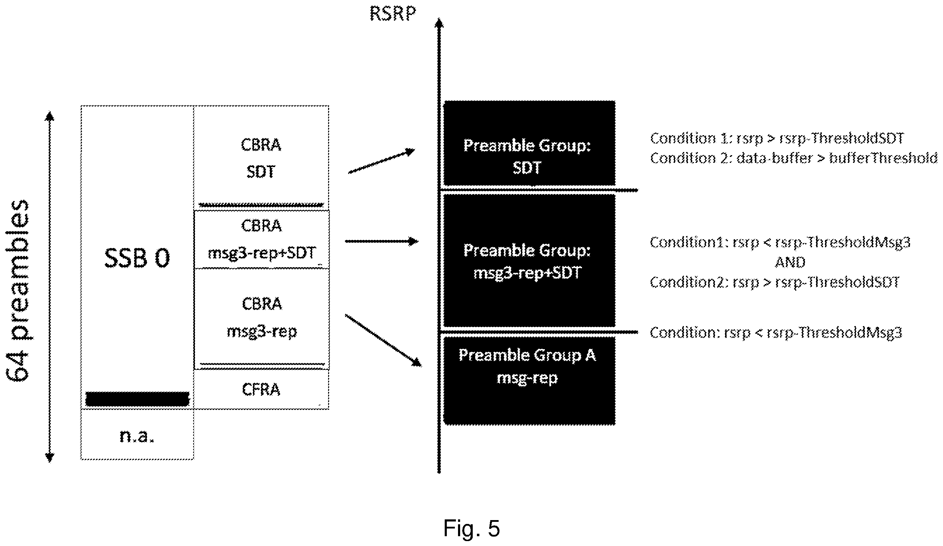

Another issue that can also be foreseen in the future is when the indications of multiple features are combined, where the conditions are opposite, i.e., in one case the RSRP threshold shall be above a value and in one case the RSRP threshold shall be below a value. This can be considered in the following example, it should be highlighted that the given example may adequately consider final standardization progress:
Consider a cell that has three preamble groups where the features utilized are msg3 repetitions and small data transmissions, thus there are 3 preamble groups used to indicate msg3-rep, SDT and msg3-rep+SDT. In this case the msg3 repetitions would have a condition to select msg3-repetitions which is that the RSRP to the cell is below a threshold. Furthermore, the SDT would have a threshold whether SDT should be performed which is that the RSRP to the cell shall be above a threshold. The straightforward solution to evaluate whether the preamble group msg3-rep+SDT shall be selected is to compare both individual conditions and if they are true then the preamble group is selected. However, given that the thresholds are likely to be set in a manner based on coverage, it is likely difficult to set thresholds such that both conditions will ever be true. This can be seen in **Fig. 5****.**

Another problem is that the UE may fulfill conditions for multiple features meaning that the UE may therefore be, based on the conditions, supposed to apply multiple preamble ranges. In these situations, it may be unclear which of the multiple preamble-ranges the UE should use. Different UEs may apply different strategies for selecting which of the multiple preamble-ranges they select in these situations which may cause uneven utilization of the preambles.

An object herein is to provide a mechanism to handle communication in an efficient and reliable manner in the wireless communications network. The invention is defined by the appended claims. Any embodiments, aspects or examples not claimed are only presented as information.

Embodiments herein disclose a solution that provides methods on conditions that are used for a preamble group that may indicate one or more features as well how to prioritize/select a preamble group over another preamble group. Embodiments herein disclose one or more of the following:
1. Introduction of a set of conditions, one or more conditions, that apply to a preamble group rather than specific features.
2. How to select preamble groups based on the set of conditions and priorities for different preamble groups.

This enables forward compatibility and an efficient way to combine features for and more clear and traceable methods for the UE to select certain preamble groups.

Thus, embodiments herein provide a solution resulting in an efficient and reliable communication in the wireless communications network.

### BRIEF DESCRIPTION OF THE DRAWINGS

Embodiments will now be described in more detail in relation to the enclosed drawings, in which:
- Fig. 1: illustrates a 4-step RACH process according to prior art;
- Fig. 2: illustrates a 2-step RACH process according to prior art;
- Fig. 3: shows an example of one SSB per PRACH occasion;
- Fig. 4: shows an example with 2 SSBs per PRACH occasion;
- Fig. 5: shows preamble grouping for feature groups, where it can be seen that the preamble group msg3-rep+SDT will never be selected;
- Fig. 6: shows a wireless communication network illustrating embodiments herein;
- Fig. 7: shows a flowchart depicting a method performed by a UE according to embodiments herein;
- Fig. 8: shows a flowchart depicting a method performed by a radio network node according to embodiments herein;
- Fig. 9: shows a block diagram depicting UEs according to embodiments herein;
- Fig. 10: shows a block diagram depicting radio network nodes according to embodiments herein;
- Fig. 11: schematically illustrates a telecommunication network connected via an intermediate network to a host computer;
- Fig. 12: is a generalized block diagram of a host computer communicating via a base station with a user equipment over a partially wireless connection; and
- Figs. 13,14,15, and 16: are flowcharts illustrating methods implemented in a communication system including a host computer, a base station and a user equipment.

### DETAILED DESCRIPTION

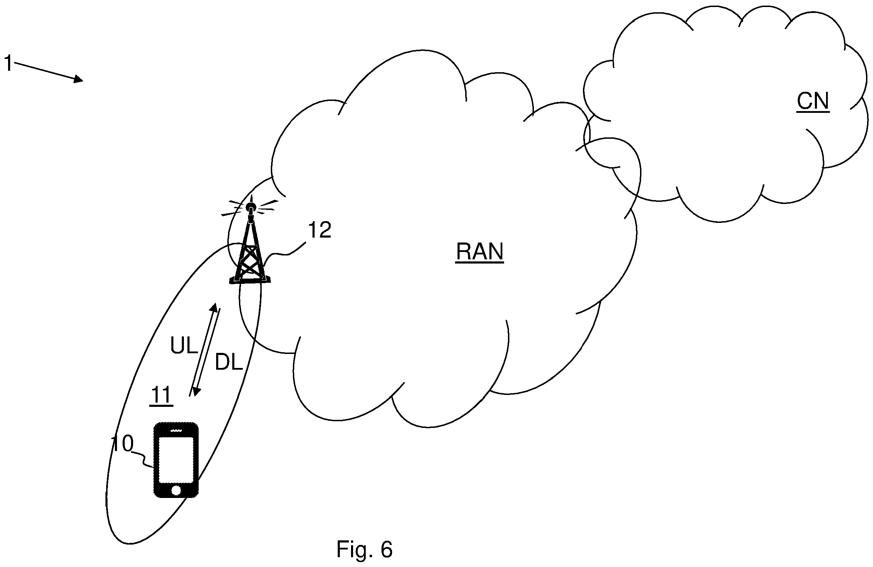

Embodiments herein relate to wireless communications networks in general. **Fig. 6** is a schematic overview depicting **a wireless communications network 1.** The wireless communications network 1 comprises one or more RANs and one or more CNs. The wireless communications network 1 may use one or a number of different technologies. Embodiments herein relate to recent technology trends that are of particular interest in a New Radio (NR) context, however, embodiments are also applicable in further development of existing wireless communications systems such as e.g. LTE or Wideband Code Division Multiple Access (WCDMA).

In the wireless communications network 1, **a user equipment (UE)** 10 exemplified herein as a wireless device such as a mobile station, a non-access point (non-AP) station (STA), a STA and/or a wireless terminal, is comprised communicating via e.g. one or more Access Networks (AN), e.g. radio access network (RAN), to one or more core networks (CN). It should be understood by the skilled in the art that "UE" is a non-limiting term which means any terminal, wireless communications terminal, user equipment, narrowband internet of things (NB-IoT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node within an area served by the radio network node.

The wireless communications network 1 comprises **a radio network node 12** providing radio coverage over a geographical area, **a first service area 11** or first cell, of a first radio access technology (RAT), such as NR, LTE, or similar. The radio network node 12 may be a transmission and reception point such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node depending e.g. on the first radio access technology and terminology used. The radio network node may be referred to as a serving radio network node wherein the service area may be referred to as a serving cell, and the serving network node communicates with the wireless device in form of DL transmissions to the wireless device and UL transmissions from the wireless device. It should be noted that a service area may be denoted as cell, beam, beam group or similar to define an area of radio coverage.

Embodiments herein deal with the UE 10 receiving and applying a random access configuration composing of one or more conditions for selecting a preamble group, where the preamble group may be a group of preambles that is used to indicate certain one or more features in the preamble (msg1), such as msg3 repetitions, small data transmissions, 2-step random access, msg1 repetitions, reduced capability etc.

Preamble groups for preamble group B may be configured for different features. A UE may that determine a first preamble from two or more groups of preambles indicated by the received configuration at least partially based on the received configuration and one or more measurements at the UE, the first preamble indicating whether one or more features are requested or not. Thus, signalling multiple features in a preamble group may be performed and embodiments herein focus on configurations and conditions on top of this.

The random access configurations are usually signalled by the network, such as the radio network node 12, as part of the Bandwidth Part (BWP) Configuration and may be either broadcasted or configured UE-specifically when the UE is connected mode.

The wording "preamble group", "early indication group" or "RACH partition" are used interchangeably herein. All wording indicate a set of preambles with one or more features that are indicated using the preamble.

The preamble groups may either be in a single PRACH occasion or in separate PRACH occasions. Thus, in principle "preamble group" may be replaced by a general PRACH resource set which can also be a subset of PRACH occasions used for indication of one or multiple features, but for embodiments herein it is sufficient to refer to "preamble groups".

According to embodiments herein each preamble group will have its own one or more preamble-specific condition(s). This means that instead of having a preamble group with its features having its separate conditions, each preamble group will have its own separate one or more conditions. The one or more conditions may for instance relate to signal strength, e.g., include RSRP threshold above/below threshold, support of a feature, data volume above threshold, and/or similar.

In the embodiments described herein the UE 10 may be configured with one or more preamble groups with one or more conditions associated with the group, that need to be fulfilled to be selected. The UE 10 determines a first preamble from a group of preambles out of one or more groups of preambles, wherein the group of preambles is selected based on whether one or more conditions, associated with the group, are fulfilled or not. Embodiments herein may disclose:
1. Introduction of a set of conditions that are applied to a preamble group rather than specific features.
2. How to select preamble groups based on the conditions and priorities for different preamble groups.

Embodiments herein enable forward compatibility and an efficient way to combine features for and more clear and traceable methods for the UE 10 to select certain preamble groups.

Another benefit of embodiments herein for 6G considerations, is that several concepts that are determined to be used based on RSRP thresholds, such as preamble group B, selection of supplementary uplink (SUL) vs normal uplink (NUL) and many more can be made more simple and unified to a single set of selections and signalling that determines selections at the UE 10 can be made more simplified.

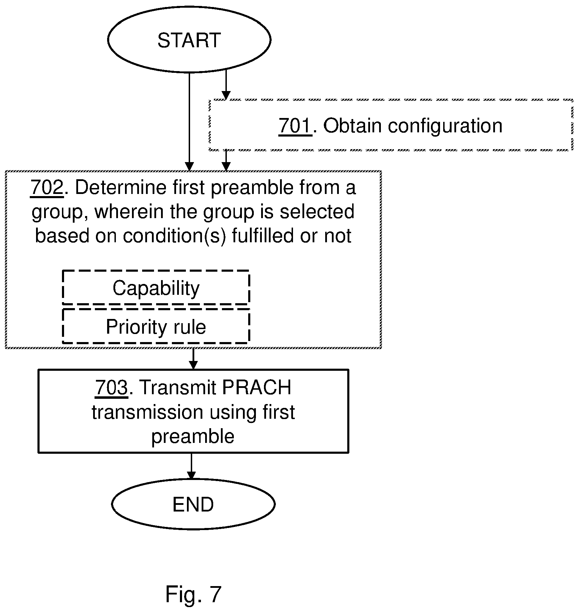

The method actions performed by the UE 10 for handling communication, for example, performing a random access procedure, in the wireless communications network 1 according to embodiments will now be described with reference to a flowchart depicted in **Fig. 7****.** The actions do not have to be taken in the order stated below, but may be taken in any suitable order. Dashed boxes indicate optional features.

**Action 701.** The UE 10 may obtain a configuration for a PRACH transmission, wherein the configuration comprises one or more groups of preambles having its respective one or more conditions (own separate one or more conditions). For example, receive configuration from the radio network node or be preconfigured with the configuration.

**Action 702.** The UE 10 determines the first preamble from a group of preambles out of one or more groups of preambles, wherein the group of preambles is selected based on whether one or more conditions, associated with the group, are fulfilled or not. For example, the UE 10 may determine the first preamble from one or more groups of preambles, wherein the one or more groups are associated with respective one or more conditions, and the first preamble is determined based on whether the respective one or more conditions are fulfilled or not. Thus, the UE 10 may determine the first preamble from the one or more groups of preambles indicated by the obtained configuration and based on whether the one or more conditions are fulfilled or not. Each group of preambles may comprise a list or a set of conditions. The one or more conditions may relate to signal strength such as may define one or more RSRPs related to one or more threshold values. Respective group of the one or more groups may further indicate one or more features associated with the respective group. The one or more features may comprise one or more of the following: msg3 repetitions, slicing, small data transmissions, reduced capability, carrier selection such as SUL /NUL; preamble group to indicate larger buffer size; whether the UE is prioritized, which UE state the UE currently is in. The group of preambles may be selected further based on a capability of the UE 10, for example, capability matching the one or more features. Thus, the UE may further determine the first preamble based on the capability of the UE 10. Thus, the UE 10 determine which of the preamble group to use from the obtained configuration according to its own capability or capabilities. For example. if the UE 10 does not support a certain feature or if there are extensions in the feature combination that the UE cannot read, the UE 10 may disregard the preamble groups associated with such a feature. The UE 10 may check one or more conditions of each preamble group of the configuration. For example, the UE 10 may disregard one or more preamble groups were one or more conditions associated with the preamble group is not fulfilled. The UE may further select or choose one or more of the preamble groups where the one or more conditions are fulfilled.

Random access preamble group selection priority.

In some cases, it might not be clear what preamble group shall be selected in-case there are multiple groups that are supported and for which the one or more conditions are fulfilled. According to the claimed emodiment, the group of preambles is selected based on a priority rule defining order of selection of the one or more groups of preambles. The priority rule may be: based on a configured priority index; based on amount of preambles in each group; based on a metric regarding performance; based on feature of the group; based on number of conditions; setting different levels of signal strength for different features; and/or based on priority of the UE. Thus, the UE 10 may determine the first preamble to use further based on the priority rule. For example, the UE 10 may select the preamble group to use for selection of the first preamble based on level of threshold. Thus, the UE 10 may select the preamble group whose threshold, e.g., RSRP threshold, is the largest among the set of preamble groups with configured RSRP threshold values no larger or smaller than the measured RSRP by the UE. As an example, when 4 groups of preambles (group A, B, C, D) are configured, and they have RSRP threshold values *T_{A},T_{B},T_{C},T_{D}* configured respectively, where *T_{A}* < *T_{B} < T_{C} < T_{D}.* Supposing the RSRP value measured based on synchronization signalling block (SSB) is larger than *T_{A},T_{B},T_{C},* but smaller than *T_{D}.* Then the first preamble will be selected from preamble group C. The priority rule may further be based on number of conditions of respective preamble group. Thus, the UE 10 may determine the first preamble to use based on a selected preamble group for which most conditions are fulfilled. For example, if there is one condition for preamble group A, and two conditions for preamble group B, the UE 10 may select preamble group B for cases when the UE 10 fulfils both conditions for preamble group A and conditions for preamble group B. The priority rule may define a priority order of the preamble groups. This priority order may be used by the UE 10 in case multiple conditions are fulfilled, and it is unclear which group to select. This makes it clear to the UE 10 what shall be selected in case there are multiple groups that are fulfilled. This can be implemented as an index where the index indicates what is prioritized first given that the UE supports the features demanded. 0 indicates that the preamble group should be prioritized first, 1 indicates that it has lower priority compared to 0 etc. In one example, a msg1+msg3 preamble group may have a lower priority than a group that would require higher coverage, which could for instance be a group consisting of slicing and small data transmissions (SDT). This means that when the conditions are fulfilled for both preamble groups, the UE would choose the group with the highest priority. Priority index is underlined below.

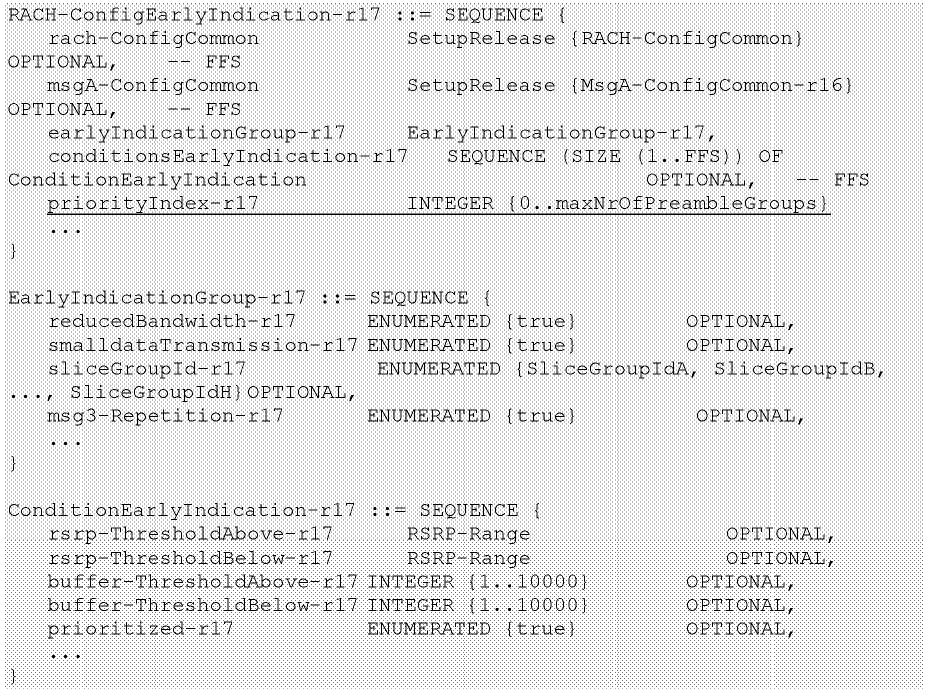

The priorities of the priority rule may be specified, hardcoded or based on rules. The priority can for instance be based on the preamble group that has the largest or smallest amount of preambles. The benefit of choosing the preamble group with the smallest amount of preambles are that it is likely that those preamble groups are rarely used.

The UE 10 may perform feature-based prioritization. When the conditions for a set of preamble groups selection are fulfilled, i.e., multiple preamble groups have met the configured threshold, the UE 10 may prioritize a preamble group associated to a specific feature or set of features based on network configuration e.g., prioritylndex. The radio network node 12 may configure prioritized preamble groups associated to a specific feature or set of features. For instance, if one group has a threshold of '17' and a second group has a threshold of '19' which are associated to the same feature set(s), UEs using higher prior feature, select the strongest preamble group, i.e. the preamble group with a threshold of 19.

The threshold for preamble group selection for the UEs perform feature-based prioritization, may be ramped up when prioritizing a feature based on network configuration. The network may configure thresholds with ramping factor for prioritizing features. In other words, different features may have different threshold based on the network configuration. For example, if a feature should meet a threshold of 17 for a preamble group, the other feature should meet a threshold of 19.

Additionally, or alternatively, the preamble groups which apply feature-based random access may be prioritized with feature-based random access (RA)-Prioritization e.g., feature-based power ramping or feature-based scaling factor back-off indicator. The features within feature sets (combination of features) that are grouped to use specific preamble group may also be prioritized with RA-Prioritization.

If the UE is prioritized through the random access prioritization-technique, the UE 10 may select a specific preamble group. This can for instance be done through network signalling where the network includes an ID of a preamble group that the UE shall apply if the UE 10 has determined that it is prioritized. The UE 10 may in some cases, e.g., if configured or specified, or in some cases not, look at the other configured conditions before determining to use the preamble group.

This can be seen in the following example:

### - RA-Prioritization

The IE *RA-Prioritization* is used to configure prioritized random access.

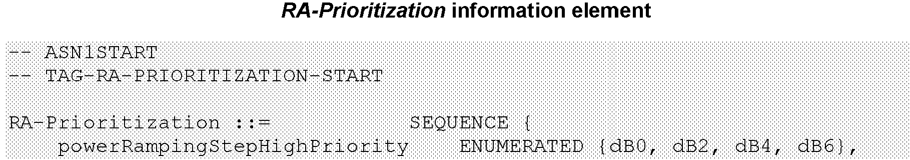

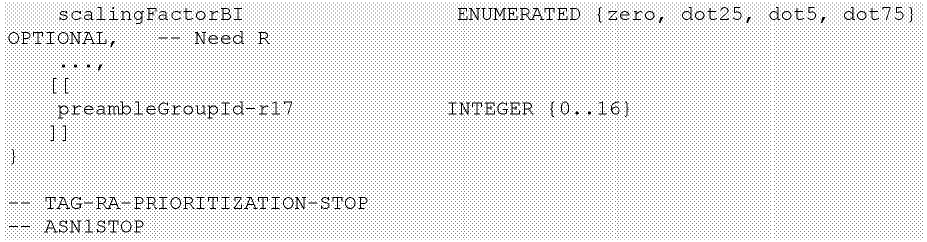

The UE 10 may select a (best) configuration to maximize either throughput or minimize delay. The priority rule may be based on a metric regarding performance. This could for instance be done by UE implementation where the UE 10 may select by itself, or the network can configure the UE to use the certain metric (latency or throughput) to determine whether one preamble group shall be chosen over another one. This determination could for instance be done through an artificial intelligence (AI) agent in the UE 10 that determines the first preamble from a selected preamble group to maximize some metric such as delay, throughput or power consumption using for instance past experiences.

In the sections above, it has been described how conditions are provided for a feature preamble group, rather than for the individual features themselves. It has also been described, in this section, how the UE 10 may determine priorities for the preamble groups, for example based on the configuration. However, it should be noted that it would be possible to address, at least part of, the problem by the UE 10 determining a priority for features or feature combinations. It should be noted that it would be possible to have priorities per features or feature combinations without the embodiments described above that describe how conditions are per feature combination, i.e., it would be possible to have priorities per feature or feature combination also if the conditions are provided for a feature or feature combination. For example, it would be possible that the UE 10 determines, e.g., based on network configuration, a priority for a feature X, e.g., SDT, a priority for a feature Y, e.g., msg3 repetitions, and a priority for a combination of feature X and feature Y. The UE 10 may then determine which feature combination to apply based on the priorities, and thereafter select the corresponding preamble group.

**Action 703.** The UE 10 transmits, to the radio network node 12, the PRACH transmission using the determined first preamble.

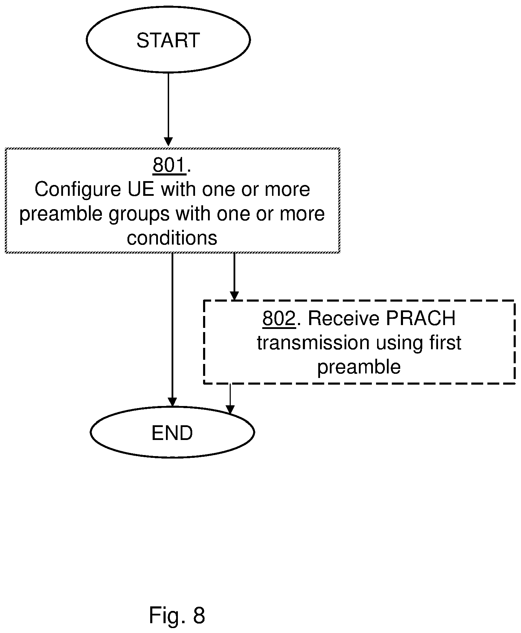

The method actions performed by the radio network node 12 for handling communication in the wireless communications network according to embodiments will now be described with reference to a flowchart depicted in **Fig. 8****.** The actions do not have to be taken in the order stated below but may be taken in any suitable order. Dashed boxes indicate optional features.

**Action 801.** The radio network node 12 configures the UE 10 with the configuration for the PRACH transmission, wherein the configuration comprises one or more groups of preambles, wherein each group of preambles comprises respective one or more conditions, associated with the group, that need to be fulfilled to be selected, or having its own separate one or more conditions. Each group of preambles may comprise one or more conditions, such as a list or a set of conditions, and/or the one or more conditions may relate to signal strength. The respective group of the one or more groups may further indicate one or more features associated with the respective group. The one or more features may comprise one or more of the following: msg3 repetitions, slicing, small data transmissions, reduced capability, carrier selection such as SUL /NUL; preamble group to indicate larger buffer size; whether the UE is prioritized, which UE state the UE currently is in. The configuration may comprise the priority rule defining order of selection of the one or more groups of preambles. The priority rule may be: based on a configured priority index; based on amount of preambles in each group; based on a metric regarding performance; based on number of conditions; based on feature of the group; setting different levels of signal strength for different features; and/or based on priority of the UE.

**Action 802.** The radio network node 12 may then receive the PRACH transmission using the determined first preamble out of a group of the one or more groups of preambles, for example, according to the configuration.

### Implementation

The above could for instance be implemented by having a list or a set of conditions for each preamble group where such conditions such as RSRP above a threshold, RSRP below a threshold, data buffer above a threshold, data buffer below a threshold, whether the UE is prioritized etc. Examples are underlined below:

### - BWP-UplinkCommon

The IE *BWP-UplinkCommon* is used to configure the common parameters of an uplink BWP. They are "cell specific" and the network ensures the necessary alignment with corresponding parameters of other UEs. The common parameters of the initial bandwidth part of the PCell are also provided via system information. For all other serving cells, the network provides the common parameters via dedicated signalling.

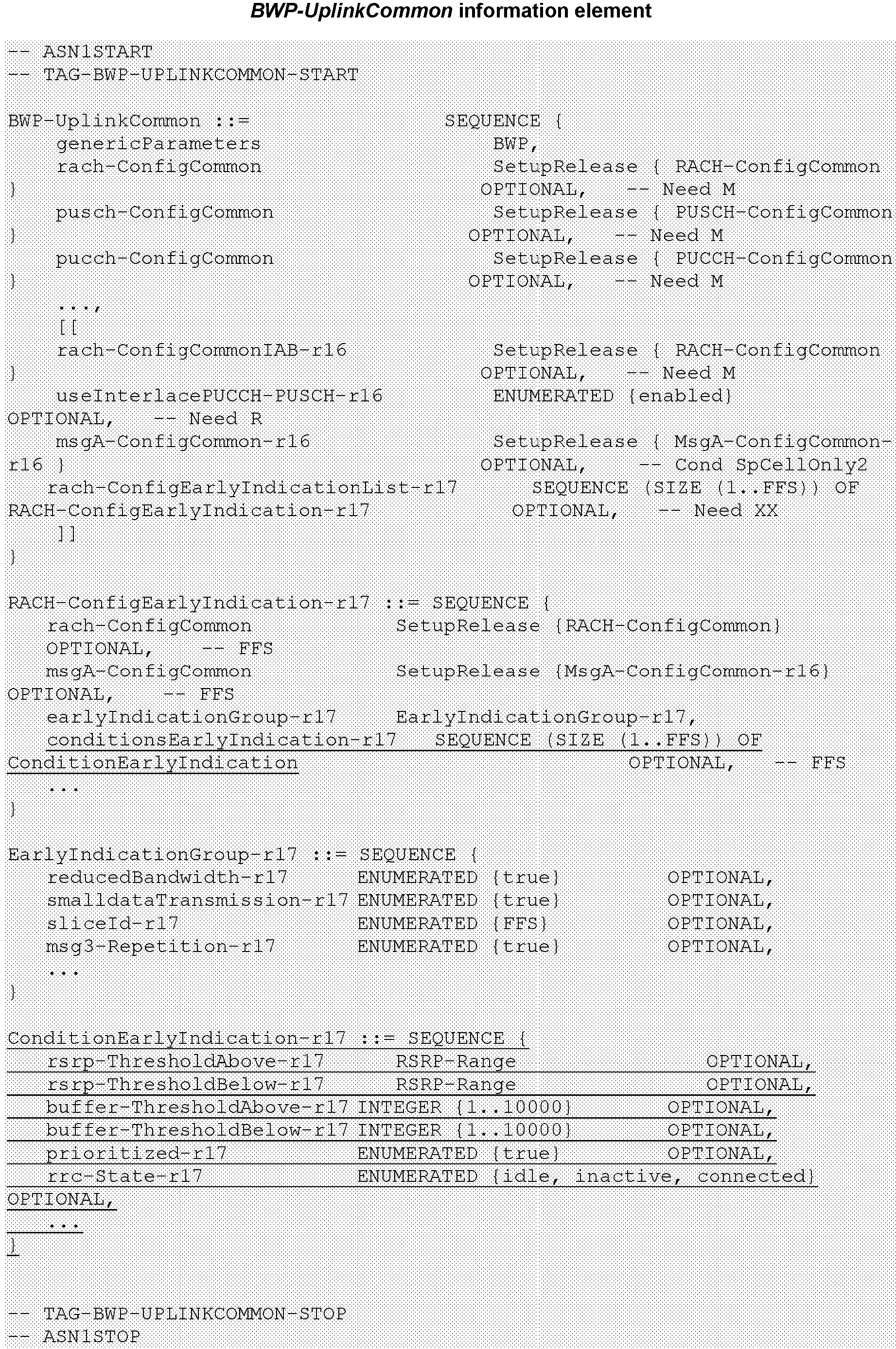

As an example, the *rsrp-ThresholdBelow* is used in the case where the feature combination is to be used under more extended coverage conditions. *rsrp-ThresholdAbove* can be used when the RSRP is above a threshold, such as when the feature combination would require higher coverage. *buffer-ThresholdAbove*/*buffer-ThresholdBelow* is used in a similar manner.

As another example, the rrc-State parameter is used when a preamble group is only for a specific RRC state, which means that only UEs in, for instance, RRC connected mode are allowed to use the preamble group. Thus, a feature may relate to type of transmission and the one or more conditions of a preamble group may relate to signal strength, amount of buffered data, priority, and/or a state of UE.

### 6G considerations.

In this implementation several more features/concepts are selected when comparing the RSRP threshold. For instance, SUL/NUL selection or carrier selection may be done when comparing a single threshold. This means that, for instance, the action of selecting 1) preamble groups to indicate a higher amount of data in the buffer, 2) SUL/NUL, 3) feature combination, and 4) 2-step vs 4-step may be performed under a single RSRP threshold.

The SUL/NUL selection based on the RSRP threshold is to select the NUL, which is the main carrier, or the SUL, which is the carrier designed to provide better coverage. In a generalization, the preamble group may also comprise multiple carriers and the thresholds can in combination with other features indicate which carrier to select out of the multiple carriers.

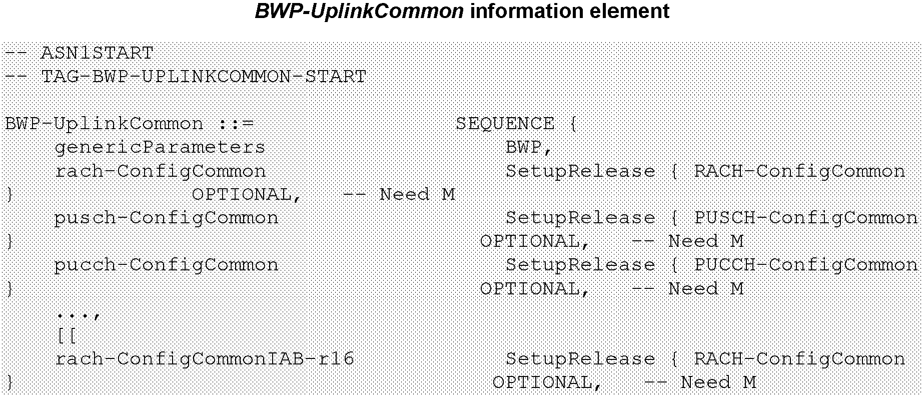

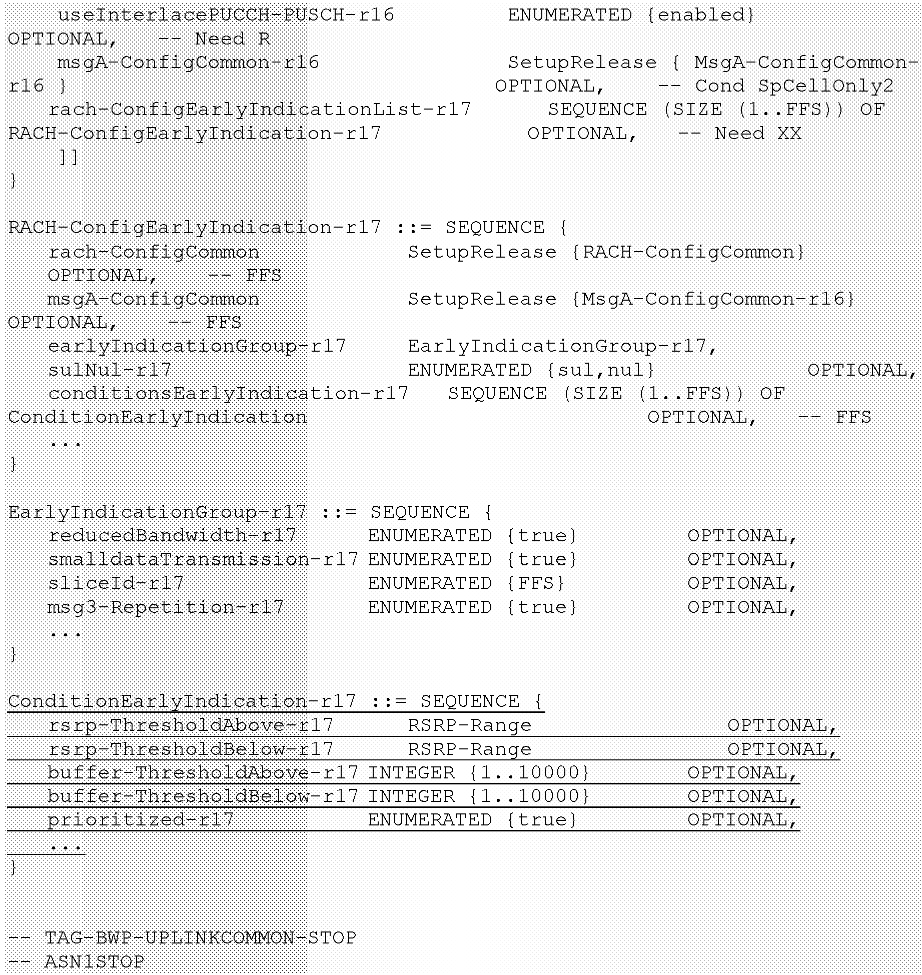

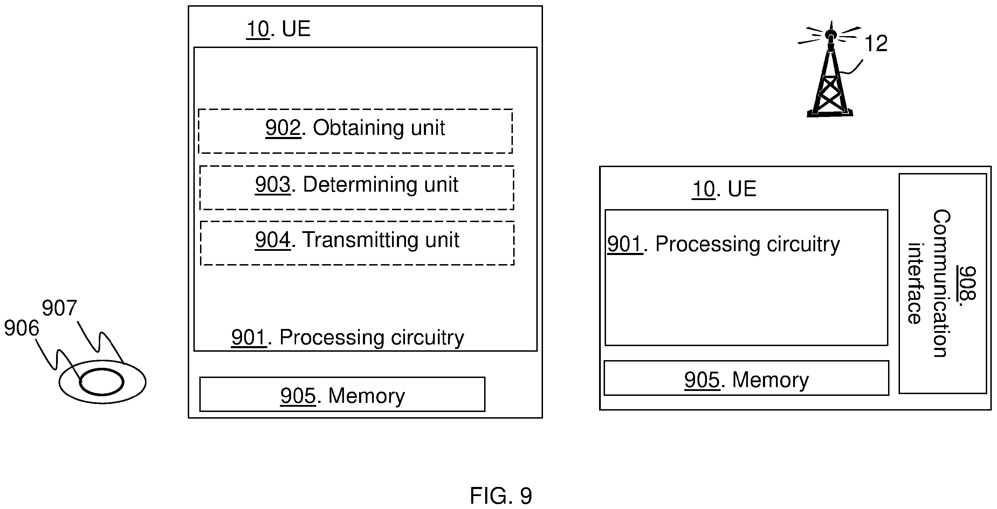

**Fig. 9** is a block diagram depicting the UE 10 for handling communication in the wireless communications network 1 according to embodiments herein.

The UE 10 may comprise **processing circuitry 901,** e.g., one or more processors, configured to perform the methods herein.

The UE 10 may comprise **an obtaining unit 902,** e.g., a reader, a receiver or a transceiver. The UE 10, the processing circuitry 901 and/or the obtaining unit 902 may be configured to obtain the configuration for the PRACH transmission, wherein the configuration comprises the one or more groups of preambles having its respective one or more conditions.

The UE 10 may comprise **a determining unit 903.** The UE 10, the processing circuitry 901, and/or the determining unit 903 is configured to determine the first preamble from the group of preambles out of one or more groups of preambles, wherein the group of preambles is selected based on whether one or more conditions, associated with the group, are fulfilled or not. Each group of preambles may comprise one or more, such as a list or a set of conditions. The one or more conditions may relate to signal strength. Respective group of the one or more groups may further indicate one or more features associated with the respective group. The one or more features may comprise one or more of the following: msg3 repetitions, slicing, small data transmissions, reduced capability, carrier selection such as SUL /NUL; preamble group to indicate larger buffer size; whether the UE is prioritized, which UE state the UE currently is in. The UE 10, the processing circuitry 901, and/or the determining unit 903 may be configured to select the group of preambles further based on the capability of the UE 10. The UE 10, the processing circuitry 901, and/or the determining unit 903 may be configured to disregard the group of preambles where one or more conditions associated with the group of preambles are not fulfilled, and to select the group of preambles for which one or more conditions are fulfilled. The UE 10, the processing circuitry 901, and/or the determining unit 903 may be configured to select the group of preambles based on the priority rule defining order of selection of the one or more groups of preambles. The priority rule may be: based on a configured priority index; based on amount of preambles in each group; based on a metric regarding performance; based on feature of the group; based on number of conditions; setting different levels of signal strength for different features; and/or based on priority of the UE.

The UE 10 may comprise **a transmitting unit 904,** e.g. a transmitter or a transceiver. The UE 10, the processing circuitry 801 and/or the transmitting unit 904 is configured to transmit, to the radio network node 12, the PRACH transmission using the determined first preamble.

The UE 10 may comprise **a memory 905.** The memory 905 comprises one or more units to be used to store data on, such as data packets, grants, preambles, groups of preambles, conditions, features, priority rules, indications, mobility events, measurements, events and applications to perform the methods disclosed herein when being executed, and similar. Furthermore, the UE 10 may comprise **a communication interface 908** such as comprising a transmitter, a receiver, a transceiver and/or one or more antennas.

The methods according to the embodiments described herein for the UE 10 are respectively implemented by means of e.g. **a computer program product 906** or a computer program, comprising instructions, i.e., software code portions, which, when executed on at least one processor, cause the at least one processor to carry out the actions described herein, as performed by the UE 10. The computer program product 906 may be stored on **a computer-readable storage medium 907,** e.g. a disc, a universal serial bus (USB) stick or similar. The computer-readable storage medium 907, having stored thereon the computer program product, may comprise the instructions which, when executed on at least one processor, cause the at least one processor to carry out the actions described herein, as performed by the UE 10. In some embodiments, the computer-readable storage medium may be a transitory or a non-transitory computer-readable storage medium. Thus, embodiments herein may disclose a UE for handling communication in a wireless communications network, wherein the UE comprises processing circuitry and a memory, said memory comprising instructions executable by said processing circuitry whereby said UE is operative to perform any of the methods herein.

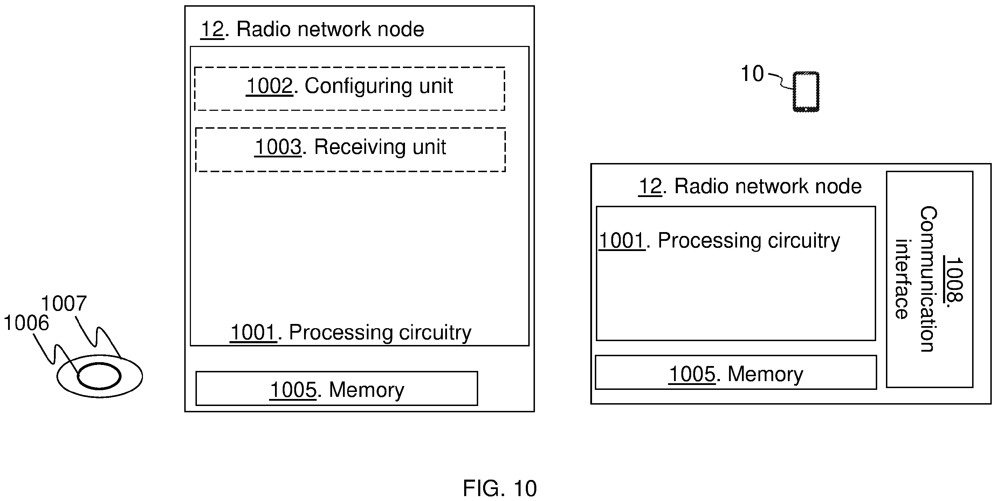

**Fig. 10** is a block diagram depicting the radio network node 12 for handling communication in the wireless communications network 1 according to embodiments herein.

The radio network node 12 may comprise **processing circuitry 1001,** e.g. one or more processors, configured to perform the methods herein.

The radio network node 12 may comprise **a configuring unit 1002,** e.g. a transmitter or a transceiver. The radio network node 12, the processing circuitry 1001 and/or the configuring unit 1002 is configured to configure the UE 10 with the configuration for the PRACH transmission, wherein the configuration comprises one or more groups of preambles, wherein each group of preambles comprises respective one or more conditions associated with the group, that need to be fulfilled to be selected. Each group of preambles may comprise one or more conditions, such as a list or a set of conditions. The one or more conditions may relate to signal strength. Respective group of the one or more groups may further indicate one or more features associated with the respective group. The one or more features may comprise one or more of the following: msg3 repetitions, slicing, small data transmissions, reduced capability, carrier selection such as SUL /NUL; preamble group to indicate larger buffer size; whether the UE is prioritized, which UE state the UE currently is in. The configuration may comprise the priority rule defining order of selection of the one or more groups of preambles. The priority rule may be: based on a configured priority index; based on amount of preambles in each group; based on number of conditions; based on a metric regarding performance; based on feature of the group; setting different levels of signal strength for different features; and/or based on priority of the UE. The radio network node 12 may comprise **a receiving unit 1003,** e.g. a receiver or a transceiver. The radio network node 12, the processing circuitry 1001 and/or the receiving unit 1003 may be configured to receive from the UE 10, a PRACH transmission using a determined first preamble out of a group of the one or more groups of preambles.

The radio network node 12 may comprise **a memory 1005.** The memory 1005 comprises one or more units to be used to store data on, such as data packets, mobility events, measurements, preambles, groups of preambles, configurations, condition(s) events and applications to perform the methods disclosed herein when being executed, and similar. Furthermore, the radio network node may comprise **a communication interface 1008** such as comprising a transmitter, a receiver, a transceiver and/or one or more antennas.

The methods according to the embodiments described herein for the radio network node 12 are respectively implemented by means of e.g. **a computer program product 1006** or a computer program, comprising instructions, i.e., software code portions, which, when executed on at least one processor, cause the at least one processor to carry out the actions described herein, as performed by the radio network node 12. The computer program product 1006 may be stored on **a computer-readable storage medium 1007,** e.g. a disc, a universal serial bus (USB) stick or similar. The computer-readable storage medium 1007, having stored thereon the computer program product, may comprise the instructions which, when executed on at least one processor, cause the at least one processor to carry out the actions described herein, as performed by the radio network node 12. In some embodiments, the computer-readable storage medium may be a transitory or a non-transitory computer-readable storage medium. Thus, embodiments herein may disclose a radio network node 12 for handling communication in a wireless communications network, wherein the radio network node 12 comprises processing circuitry and a memory, said memory comprising instructions executable by said processing circuitry whereby said radio network node 12 is operative to perform any of the methods herein.

In some embodiments a more general term "radio network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, gNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or circuits may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

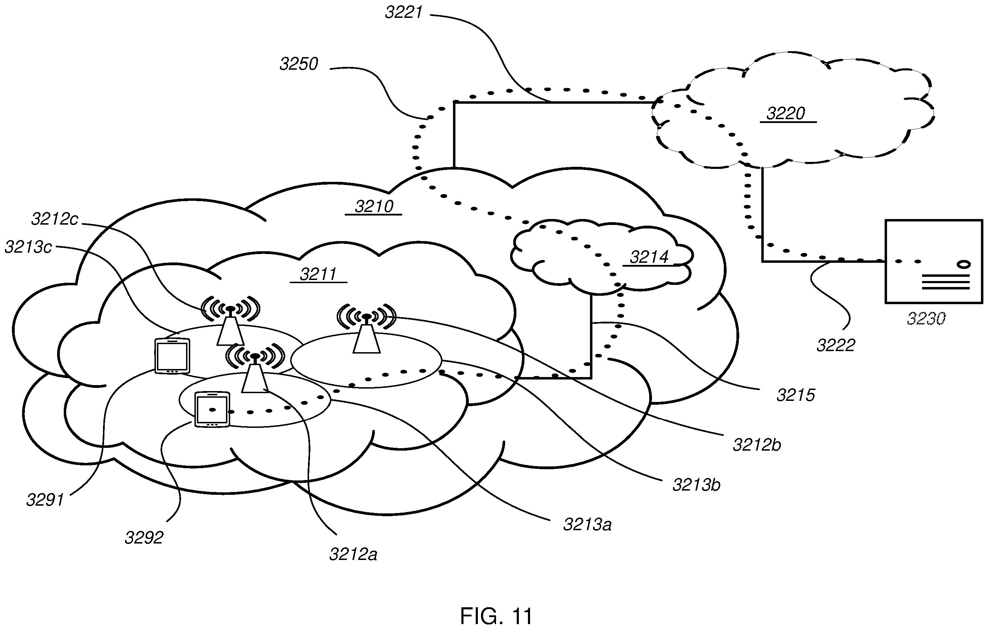

With reference to **Fig 11****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10 and relay UE 13, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 11 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signalling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

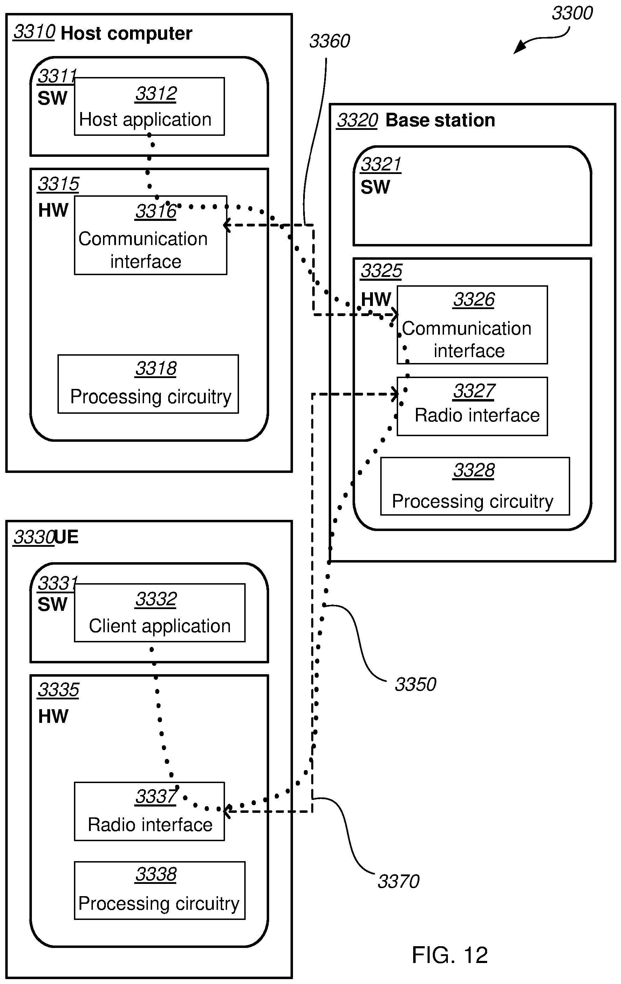

Example implementations, in accordance with an embodiment, of the UE, base station and host computer discussed in the preceding paragraphs will now be described with reference to **Fig. 12****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.12) served by the base station 3320. The communication interface 3326 may be configured to facilitate a connection 3360 to the host computer 3310. The connection 3360 may be direct or it may pass through a core network (not shown in Fig.12) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 12 may be identical to the host computer 3230, one of the base stations 3212a, 3212b, 3212c and one of the UEs 3291, 3292 of Fig. 11, respectively. This is to say, the inner workings of these entities may be as shown in Fig. 12 and independently, the surrounding network topology may be that of Fig. 11.

In Fig. 12, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the performance since preambles are selected in an efficient manner and thereby provide benefits such as reduced user waiting time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signalling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

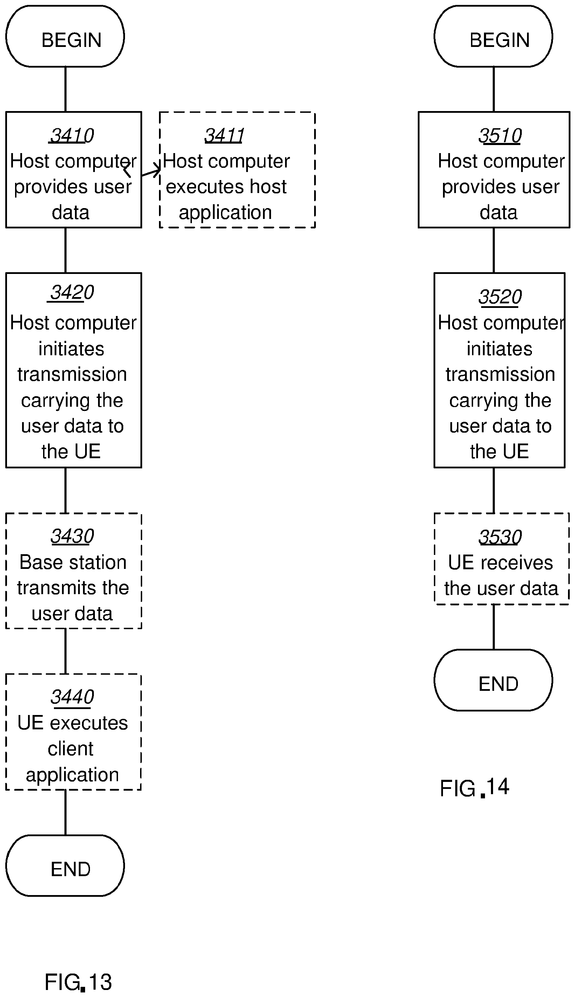

**Fig. 13** is a flowchart illustrating a method implemented in a communication system, in accordance with one embodiment. The communication system includes a host computer, a base station and a UE which may be those described with reference to Figures 11 and 12. For simplicity of the present disclosure, only drawing references to Figure 13 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 14** is a flowchart illustrating a method implemented in a communication system, in accordance with one embodiment. The communication system includes a host computer, a base station and a UE which may be those described with reference to Figures 11 and 12. For simplicity of the present disclosure, only drawing references to Figure 14 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

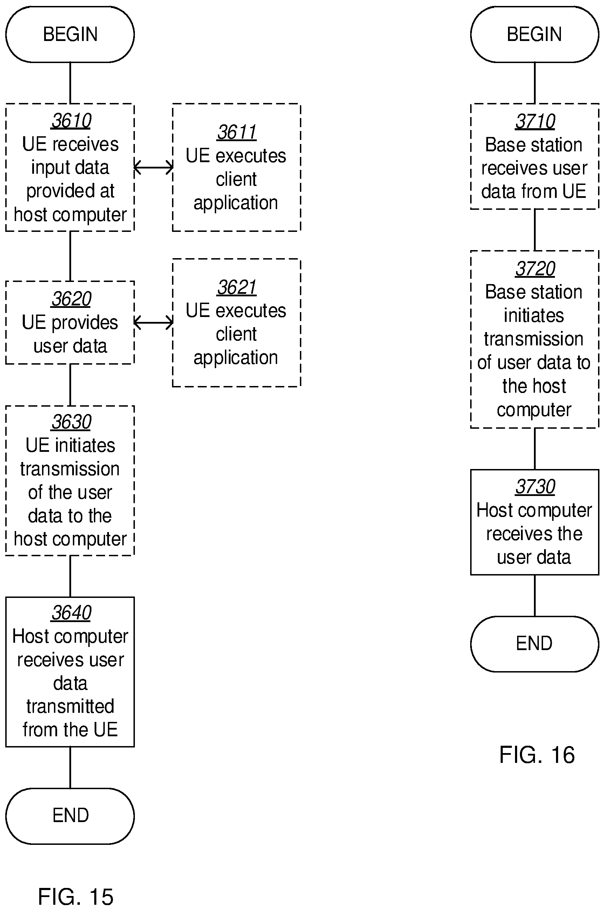

**Fig. 15** is a flowchart illustrating a method implemented in a communication system, in accordance with one embodiment. The communication system includes a host computer, a base station and a UE which may be those described with reference to Figures 11 and 12. For simplicity of the present disclosure, only drawing references to Figure 15 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 16** is a flowchart illustrating a method implemented in a communication system, in accordance with one embodiment. The communication system includes a host computer, a base station and a UE which may be those described with reference to Figures 11 and 12. For simplicity of the present disclosure, only drawing references to Figure 16 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

| Abbreviation | Explanation |
|---|---|
| BFR | Beam Failure Recovery |
| MAC | Medium Access Control |
| SSB | Synchronization Signal Block |
| PRACH | Physical Random Access Channel |
| RACH | Random Access Channel |
| RO | (P)RACH occasion, i.e. the timing frequency resource used for on PRACH transmission |
| RRC | Radio Resource Control |
| RSRP | Reference Signal Received Power |
| TA | Timing Advance |

## Claims

1. A method performed by a user equipment, UE, (10) for handling communication in a wireless communications network, the method comprising:
- determining (702) a first preamble from a group of preambles out of one or more groups of preambles, wherein the group of preambles is selected based on whether one or more conditions, associated with the group, are fulfilled or not, wherein the group of preambles is further selected based on a priority rule defining an order of selection of the one or more groups of preambles, and wherein the group of preambles is selected based on level of signal strength and/or number of conditions of respective group of preambles; and
- transmitting (703), to a radio network node (12), a physical random access channel, PRACH, transmission using the determined first preamble.

2. The method according to claim 1, further comprising
- obtaining (701) a configuration for the PRACH transmission, wherein the configuration comprises the one or more groups of preambles having its respective one or more conditions.

3. The method according to any of the claims 1-2, wherein respective group of the one or more groups further indicates one or more features associated with the respective group.

4. The method according to claim 3, wherein the group of preambles is selected further based on a capability of the UE.

5. The method according to any of the claims 1-4, wherein determining (702) the first preamble comprises disregarding a group of preambles where one or more conditions associated with the group of preambles are not fulfilled, and selecting the group of preambles for which one or more conditions are fulfilled.

6. The method according to any of the claims 1-5, wherein the priority rule is: based on a configured priority index; based on amount of preambles in each group; based on a metric regarding performance; based on number of conditions; based on feature of the group; setting different levels of signal strength for different features; and/or based on priority of the UE.

7. A method performed by a radio network node (12) for handling communication in a wireless communications network, the method comprising:
- configuring (801) a user equipment, UE, (10) with a configuration for a physical random access channel, PRACH, transmission, wherein the configuration comprises one or more groups of preambles, wherein each group of preambles comprises respective one or more conditions, associated with the group, that need to be fulfilled to be selected, wherein the configuration comprises a priority rule defining an order of selection of the one or more groups of preambles, and the one or more conditions comprises a level of signal strength and the priority rule comprises number of conditions of respective group of preambles.

8. The method according to claim 7, further comprising
- receiving (802) a physical random access channel, PRACH, transmission using a determined first preamble out of a group of the one or more groups of preambles.

9. The method according to any of the claims 7-8, wherein respective group of the one or more groups further indicates one or more features associated with the respective group.

10. The method according to any of the claims 7-9, wherein the priority rule is: based on a configured priority index; based on amount of preambles in each group; based on a metric regarding performance; based on number of conditions; based on feature of the group; setting different levels of signal strength for different features; and/or based on priority of the UE.

11. A computer program product comprising instructions, which, when executed on at least one processor, cause the at least one processor to carry out the method according to any of the claims 1-10, as performed by the radio network node and UE, respectively.

12. A computer-readable storage medium, having stored thereon a computer program product comprising instructions which, when executed on at least one processor, cause the at least one processor to carry out the method according to any of the claims 1-10, as performed by the UE or radio network node, respectively.

13. A user equipment, UE, (10) for handling communication in a wireless communications network, wherein the UE is configured to:
determine a first preamble from a group of preambles out of one or more groups of preambles, wherein the group of preambles is selected based on whether one or more conditions, associated with the group, are fulfilled or not, wherein the group of preambles is further selected based on a priority rule defining an order of selection of the one or more groups of preambles, and wherein the group of preambles is selected based on level of signal strength and/or number of conditions of respective group of preambles; and
transmit, to the radio network node (12), a physical random access channel, PRACH, transmission using the determined first preamble.

14. The UE according to claim 13, wherein the UE is further configured to
obtain a configuration for the PRACH transmission, wherein the configuration comprises the one or more groups of preambles having its respective one or more conditions.

15. The UE according to any of the claims 13-14, wherein respective group of the one or more groups further indicates one or more features associated with the respective group.

16. The UE according to claim 15, wherein the UE is configured to select the group of preambles further based on a capability of the UE.

17. The UE according to any of the claims 13-16, wherein the UE is configured to disregard a group of preambles where one or more conditions associated with the group of preambles are not fulfilled, and to select the group of preambles for which one or more conditions are fulfilled.

18. The UE according to any of the claims 13-17, wherein the priority rule is: based on a configured priority index; based on amount of preambles in each group; based on a metric regarding performance; based on number of conditions; based on feature of the group; setting different levels of signal strength for different features; and/or based on priority of the UE.

19. A radio network node (12) for handling communication in a wireless communications network, wherein the radio network node is configured to
configure a user equipment, UE, (10) with a configuration for a physical random access channel, PRACH, transmission, wherein the configuration comprises one or more groups of preambles, wherein each group of preambles comprises respective one or more conditions, associated with the group, that need to be fulfilled to be selected, wherein the configuration comprises a priority rule defining an order of selection of the one or more groups of preambles, and the one or more conditions comprises a level of signal strength and the priority rule comprises number of conditions of respective group of preambles.

20. The radio network node according to claim 19, wherein the radio network node is configured to
receive a physical random access channel, PRACH, transmission using a determined first preamble out of a group of the one or more groups of preambles.

21. The radio network node according to any of the claims 19-20, wherein respective group of the one or more groups further indicates one or more features associated with the respective group.

22. The radio network node according to any of the claims 19-21, wherein the priority rule is: based on a configured priority index; based on amount of preambles in each group; based on number of conditions; based on a metric regarding performance; based on feature of the group; setting different levels of signal strength for different features; and/or based on priority of the UE.

## Patentansprüche

1. Verfahren, das von einer Benutzereinrichtung, UE, (10) durchgeführt wird, zur Handhabung von Kommunikation in einem Drahtloskommunikationsnetzwerk, wobei das Verfahren Folgendes umfasst:
- Bestimmen (702) einer ersten Präambel aus einer Gruppe von Präambeln aus einer oder mehreren Gruppen von Präambeln, wobei die Gruppe von Präambeln basierend darauf ausgewählt wird, ob eine oder mehrere mit der Gruppe assoziierte Bedingungen erfüllt werden oder nicht, wobei die Gruppe von Präambeln ferner basierend auf einer Prioritätsregel ausgewählt wird, die eine Reihenfolge der Auswahl der einen oder der mehreren Gruppen von Präambeln definiert, und wobei die Gruppe von Präambeln basierend auf einem Signalstärkepegel und/oder einer Anzahl von Bedingungen jeweiliger Gruppen von Präambeln ausgewählt wird; und
- Senden (703) einer Physical Random Access Channel-Übertragung, PRACH-Übertragung, unter Verwendung der bestimmten ersten Präambel an einen Funknetzwerkknoten (12).

2. Verfahren nach Anspruch 1, ferner umfassend:
- Erhalten (701) einer Konfiguration für die PRACH-Übertragung, wobei die Konfiguration die eine oder die mehreren Präambeln mit ihrer jeweiligen einen oder ihren jeweiligen mehreren Bedingungen umfasst.

3. Verfahren nach einem der Ansprüche 1 bis 2, wobei die jeweilige Gruppe der einen oder der mehreren Gruppen ferner ein oder mehrere Merkmale angibt, die mit der jeweiligen Gruppe assoziiert sind.

4. Verfahren nach Anspruch 3, wobei die Gruppe von Präambeln ferner basierend auf einer Fähigkeit der UE ausgewählt wird.

5. Verfahren nach einem der Ansprüche 1 bis 4, wobei das Bestimmen (702) der ersten Präambel ein Ignorieren einer Gruppe von Präambeln, wenn eine oder mehrere mit der Gruppe von Präambeln assoziierte Bedingungen nicht erfüllt werden, und Auswählen der Gruppe von Präambeln umfasst, für die eine oder mehrere Bedingungen erfüllt werden.

6. Verfahren nach einem der Ansprüche 1 bis 5, wobei die Prioritätsregel auf einem konfigurierten Prioritätsindex basiert; auf einer Menge von Präambeln in jeder Gruppe basiert; auf einer Metrik hinsichtlich der Leistungsfähigkeit basiert; auf einer Anzahl von Bedingungen basiert; auf einem Merkmal der Gruppe basiert; verschiedene Signalstärkepegel für verschiedene Merkmale einstellt und/oder auf einer Priorität der UE basiert.

7. Verfahren, das von einem Funknetzwerkknoten (12) durchgeführt wird, zur Handhabung von Kommunikation in einem Drahtloskommunikationsnetzwerk, wobei das Verfahren Folgendes umfasst:
- Konfigurieren (801) einer Benutzereinrichtung, UE, (10) mit einer Konfiguration für eine Physical Random Access Channel-Übertragung, PRACH-Übertragung, wobei die Konfiguration eine oder mehrere Gruppen von Präambeln umfasst, wobei jede Gruppe von Präambeln jeweilige eine oder mehrere Bedingungen umfasst, die mit der Gruppe assoziiert sind und die erfüllt werden müssen, damit sie ausgewählt wird, wobei die Konfiguration eine Prioritätsregel umfasst, die eine Reihenfolge der Auswahl der einen oder der mehreren Gruppen von Präambeln definiert, und die eine oder die mehreren Gruppen von Präambeln einen Signalstärkepegel umfassen und die Prioritätsregel eine Anzahl von Bedingungen jeweiliger Gruppen von Präambeln umfasst.

8. Verfahren nach Anspruch 7, ferner umfassend:
- Empfangen (802) einer Physical Random Access Channel-Übertragung, PRACH-Übertragung, unter Verwendung einer bestimmten ersten Präambel aus einer Gruppe der einen oder der mehreren Gruppen von Präambeln.

9. Verfahren nach einem der Ansprüche 7 bis 8, wobei die jeweilige Gruppe der einen oder der mehreren Gruppen ferner ein oder mehrere Merkmale angibt, die mit der jeweiligen Gruppe assoziiert sind.

10. Verfahren nach einem der Ansprüche 7 bis 9, wobei die Prioritätsregel auf einem konfigurierten Prioritätsindex basiert; auf einer Menge von Präambeln in jeder Gruppe basiert; auf einer Metrik hinsichtlich der Leistungsfähigkeit basiert; auf einer Anzahl von Bedingungen basiert; auf einem Merkmal der Gruppe basiert; verschiedene Signalstärkepegel für verschiedene Merkmale einstellt und/oder auf einer Priorität der UE basiert.

11. Computerprogrammprodukt, umfassend Anweisungen, die bei Ausführung auf mindestens einem Prozessor den mindestens einen Prozessor zum Ausführen des Verfahrens nach einem der Ansprüche 1 bis 10 veranlassen, wie von dem Funknetzwerkknoten bzw. der UE durchgeführt.

12. Computerlesbares Speichermedium mit einem darauf gespeicherten Computerprogrammprodukt, das Anweisungen umfasst, die bei Ausführung auf mindestens einem Prozessor den mindestens einen Prozessor zum Ausführen des Verfahrens nach einem der Ansprüche 1 bis 10 veranlassen, wie von der UE bzw. dem Funknetzwerkknoten durchgeführt.

13. Benutzereinrichtung, UE, (10) zum Handhaben von Kommunikation in einem Drahtloskommunikationsnetzwerk, wobei die UE konfiguriert ist zum:
Bestimmen einer ersten Präambel aus einer Gruppe von Präambeln aus einer oder mehreren Gruppen von Präambeln, wobei die Gruppe von Präambeln basierend darauf ausgewählt wird, ob eine oder mehrere mit der Gruppe assoziierte Bedingungen erfüllt werden oder nicht, wobei die Gruppe von Präambeln ferner basierend auf einer Prioritätsregel ausgewählt wird, die eine Reihenfolge der Auswahl der einen oder der mehreren Gruppen von Präambeln definiert, und wobei die Gruppe von Präambeln basierend auf einem Signalstärkepegel und/oder einer Anzahl von Bedingungen jeweiliger Gruppen von Präambeln ausgewählt wird; und
Senden einer Physical Random Access Channel-Übertragung, PRACH-Übertragung, unter Verwendung der bestimmten ersten Präambel an den Funknetzwerkknoten (12).

14. UE nach Anspruch 13, wobei die UE ferner konfiguriert ist zum
Erhalten einer Konfiguration für die PRACH-Übertragung, wobei die Konfiguration die eine oder die mehreren Präambeln mit ihrer jeweiligen einen oder ihren jeweiligen mehreren Bedingungen umfasst.

15. UE nach einem der Ansprüche 13 bis 14, wobei die jeweilige Gruppe der einen oder der mehreren Gruppen ferner ein oder mehrere Merkmale angibt, die mit der jeweiligen Gruppe assoziiert sind.

16. UE nach Anspruch 15, wobei die UE so konfiguriert ist, dass sie die Gruppe von Präambeln ferner basierend auf einer Fähigkeit der UE auswählt.

17. UE nach einem der Ansprüche 13 bis 16, wobei die UE so konfiguriert ist, dass sie eine Gruppe von Präambeln ignoriert, wenn eine oder mehrere mit der Gruppe von Präambeln assoziierte Bedingungen nicht erfüllt werden, und die Gruppe von Präambeln auswählt, für die eine oder mehrere Bedingungen erfüllt werden.

18. UE nach einem der Ansprüche 13 bis 17, wobei die Prioritätsregel auf einem konfigurierten Prioritätsindex basiert; auf einer Menge von Präambeln in jeder Gruppe basiert; auf einer Metrik hinsichtlich der Leistungsfähigkeit basiert; auf einer Anzahl von Bedingungen basiert; auf einem Merkmal der Gruppe basiert; verschiedene Signalstärkepegel für verschiedene Merkmale einstellt und/oder auf einer Priorität der UE basiert.

19. Funknetzwerkknoten (12) zum Handhaben von Kommunikation in einem Drahtloskommunikationsnetzwerk, wobei der Funknetzwerkknoten konfiguriert ist zum
Konfigurieren einer Benutzereinrichtung, UE, (10) mit einer Konfiguration für eine Physical Random Access Channel-Übertragung, PRACH-Übertragung, wobei die Konfiguration eine oder mehrere Gruppen von Präambeln umfasst, wobei jede Gruppe von Präambeln jeweilige eine oder mehrere Bedingungen umfasst, die mit der Gruppe assoziiert sind und die erfüllt werden müssen, damit sie ausgewählt wird, wobei die Konfiguration eine Prioritätsregel umfasst, die eine Reihenfolge der Auswahl der einen oder der mehreren Gruppen von Präambeln definiert, und die eine oder die mehreren Gruppen von Präambeln einen Signalstärkepegel umfassen und die Prioritätsregel eine Anzahl von Bedingungen jeweiliger Gruppen von Präambeln umfasst.

20. Funknetzwerkknoten nach Anspruch 19, wobei der Funknetzwerkknoten konfiguriert ist zum
Empfangen einer Physical Random Access Channel-Übertragung, PRACH-Übertragung, unter Verwendung einer bestimmten ersten Präambel aus einer Gruppe der einen oder der mehreren Gruppen von Präambeln.

21. Funknetzwerkknoten nach einem der Ansprüche 19 bis 20, wobei die jeweilige Gruppe der einen oder der mehreren Gruppen ferner ein oder mehrere Merkmale angibt, die mit der jeweiligen Gruppe assoziiert sind.

22. Funknetzwerkknoten nach einem der Ansprüche 19 bis 21, wobei die Prioritätsregel auf einem konfigurierten Prioritätsindex basiert; auf einer Menge von Präambeln in jeder Gruppe basiert; auf einer Anzahl von Bedingungen basiert; auf einer Metrik hinsichtlich der Leistungsfähigkeit basiert; auf einem Merkmal der Gruppe basiert; verschiedene Signalstärkepegel für verschiedene Merkmale einstellt und/oder auf einer Priorität der UE basiert.

## Revendications

1. Procédé réalisé par un équipement utilisateur, UE, (10) pour la gestion de communication dans un réseau de communication sans fil, le procédé comprenant :
- la détermination (702) d'un premier préambule dans un groupe de préambules parmi un ou plusieurs groupes de préambules, dans lequel le groupe de préambules est sélectionné sur la base du fait qu'une ou plusieurs conditions, associées au groupe, sont ou non remplies, dans lequel le groupe de préambules est en outre sélectionné sur la base d'une règle de priorité définissant un ordre de sélection des un ou plusieurs groupes de préambules, et dans lequel le groupe de préambules est sélectionné sur la base d'un niveau de force de signal et/ou d'un nombre de conditions du groupe de préambules respectif ; et
- l'émission (703), à un nœud de réseau radio (12), d'une transmission de canal d'accès aléatoire physique, PRACH, à l'aide du premier préambule déterminé.

2. Procédé selon la revendication 1, comprenant en outre
- l'obtention (701) d'une configuration pour la transmission PRACH, dans lequel la configuration comprend les un ou plusieurs groupes de préambules ayant leurs une ou plusieurs conditions respectives.

3. Procédé selon la revendication 1 ou 2, dans lequel un groupe respectif parmi les un ou plusieurs groupes indique en outre une ou plusieurs caractéristiques associées au groupe respectif.

4. Procédé selon la revendication 3, dans lequel le groupe de préambules est sélectionné en outre sur la base d'une capacité de l'UE.

5. Procédé selon l'une quelconque des revendications 1 à 4, dans lequel la détermination (702) du premier préambule comprend le fait de ne pas tenir compte d'un groupe de préambules pour lequel une ou plusieurs conditions associées au groupe de préambules ne sont pas remplies, et la sélection du groupe de préambules pour lequel une ou plusieurs conditions sont remplies.

6. Procédé selon l'une quelconque des revendications 1 à 5, dans lequel la règle de priorité est : sur la base d'un indice de priorité configuré ; sur la base d'une quantité de préambules dans chaque groupe ; sur la base d'une métrique concernant une performance ; sur la base d'un nombre de conditions ; sur la base d'une caractéristique du groupe ; la définition de différents niveaux de force de signal pour différentes caractéristiques ; et/ou sur la base d'une priorité de l'UE.

7. Procédé réalisé par un nœud de réseau radio (12) pour la gestion de communication dans un réseau de communication sans fil, le procédé comprenant :
- la configuration (801) d'un équipement utilisateur, UE, (10) avec une configuration pour une transmission de canal d'accès aléatoire physique, PRACH, dans lequel la configuration comprend un ou plusieurs groupes de préambules, dans lequel chaque groupe de préambules comprend une ou plusieurs conditions respectives associées au groupe, qui doivent être remplies pour qu'il soit sélectionné, dans lequel la configuration comprend une règle de priorité définissant un ordre de sélection des un ou plusieurs groupes de préambules, et les une ou plusieurs conditions comprennent un niveau de force de signal et la règle de priorité comprend un nombre de conditions d'un groupe de préambules respectif.

8. Procédé selon la revendication 7, comprenant en outre
- la réception (802) d'une transmission de canal d'accès aléatoire physique, PRACH, à l'aide d'un premier préambule déterminé dans un groupe parmi les un ou plusieurs groupes de préambules.

9. Procédé selon la revendication 7 ou 8, dans lequel un groupe respectif parmi les un ou plusieurs groupes indique en outre une ou plusieurs caractéristiques associées au groupe respectif.

10. Procédé selon l'une quelconque des revendications 7 à 9, dans lequel la règle de priorité est : sur la base d'un indice de priorité configuré ; sur la base d'une quantité de préambules dans chaque groupe ; sur la base d'une métrique concernant une performance ; sur la base d'un nombre de conditions ; sur la base d'une caractéristique du groupe ; la définition de différents niveaux de force de signal pour différentes caractéristiques ; et/ou sur la base d'une priorité de l'UE.

11. Produit programme informatique comprenant des instructions qui, lorsqu'elles sont exécutées sur au moins un processeur, amènent l'au moins un processeur à réaliser le procédé selon l'une quelconque des revendications 1 à 10, tel que mis en œuvre respectivement par le nœud de réseau radio et l'UE.

12. Support lisible par ordinateur sur lequel est stocké un produit programme informatique comprenant des instructions qui, lorsqu'elles sont exécutées sur au moins un processeur, amènent l'au moins un processeur à réaliser le procédé selon l'une quelconque des revendications 1 à 10, tel que mis en œuvre respectivement par le nœud de réseau radio et l'UE.

13. Equipement utilisateur, UE, (10) pour la gestion de communication dans un réseau de communication sans fil, dans lequel l'UE est configuré pour :
déterminer un premier préambule dans un groupe de préambules parmi un ou plusieurs groupes de préambules, dans lequel le groupe de préambules est sélectionné sur la base du fait qu'une ou plusieurs conditions, associées au groupe, sont ou non remplies, dans lequel le groupe de préambules est en outre sélectionné sur la base d'une règle de priorité définissant un ordre de sélection des un ou plusieurs groupes de préambules, et dans lequel le groupe de préambules est sélectionné sur la base d'un niveau de force de signal et/ou d'un nombre de conditions du groupe de préambules respectif ; et
émettre, au nœud de réseau radio (12), une transmission de canal d'accès aléatoire physique, PRACH, à l'aide du premier préambule déterminé.

14. UE selon la revendication 13, dans lequel l'UE est en outre configuré pour
obtenir une configuration pour la transmission PRACH, dans lequel la configuration comprend les un ou plusieurs groupes de préambules ayant leurs une ou plusieurs conditions respectives.

15. UE selon la revendication 13 ou 14, dans lequel un groupe respectif parmi les un ou plusieurs groupes indique en outre une ou plusieurs caractéristiques associées au groupe respectif.

16. UE selon la revendication 15, dans lequel l'UE est configuré pour sélectionner le groupe de préambules en outre sur la base d'une capacité de l'UE.

17. UE selon l'une quelconque des revendications 13 à 16, dans lequel l'UE est configuré pour ne pas tenir compte d'un groupe de préambules pour lequel une ou plusieurs conditions associées au groupe de préambules ne sont pas remplies, et pour sélectionner le groupe de préambules pour lequel une ou plusieurs conditions sont remplies.

18. UE selon l'une quelconque des revendications 13 à 17, dans lequel la règle de priorité est : sur la base d'un indice de priorité configuré ; sur la base d'une quantité de préambules dans chaque groupe ; sur la base d'une métrique concernant une performance ; sur la base d'un nombre de conditions ; sur la base d'une caractéristique du groupe ; la définition de différents niveaux de force de signal pour différentes caractéristiques ; et/ou sur la base d'une priorité de l'UE.

19. Nœud de réseau radio (12) pour la gestion de communication dans un réseau de communication sans fil, dans lequel le nœud de réseau radio est configuré pour
configurer un équipement utilisateur, UE, (10) avec une configuration pour une transmission de canal d'accès aléatoire physique, PRACH, dans lequel la configuration comprend un ou plusieurs groupes de préambules, dans lequel chaque groupe de préambules comprend une ou plusieurs conditions respectives associées au groupe, qui doivent être remplies pour qu'il soit sélectionné, dans lequel la configuration comprend une règle de priorité définissant un ordre de sélection des un ou plusieurs groupes de préambules, et les une ou plusieurs conditions comprennent un niveau de force de signal et la règle de priorité comprend un nombre de conditions d'un groupe de préambules respectif.

20. Nœud de réseau radio selon la revendication 19, dans lequel le nœud de réseau radio est configuré pour
recevoir une transmission de canal d'accès aléatoire physique, PRACH, à l'aide d'un premier préambule déterminé dans un groupe parmi les un ou plusieurs groupes de préambules.

21. Nœud de réseau radio selon la revendication 19 ou 20, dans lequel un groupe respectif parmi les un ou plusieurs groupes indique en outre une ou plusieurs caractéristiques associées au groupe respectif.

22. Nœud de réseau radio selon l'une quelconque des revendications 19 à 21, dans lequel la règle de priorité est : sur la base d'un indice de priorité configuré ; sur la base d'une quantité de préambules dans chaque groupe ; sur la base d'un nombre de conditions ; sur la base d'une métrique concernant une performance ; sur la base d'une caractéristique du groupe ; la définition de différents niveaux de force de signal pour différentes caractéristiques ; et/ou sur la base d'une priorité de l'UE.
